# FASCICULE DE BREVET EUROPEEN

(11) **EP 2 040 811 B1**
(45) Date de publication et mention de la délivrance du brevet: **10.08.2011**
(21) Numéro de dépôt: 07788903.8
(22) Date de dépôt: 18.06.2007
(51) Int. Cl.: B01D 15/18

(54) **PROCEDE DE SEPARATION SEQUENCE MULTICOLONNES**
VERFAHREN ZUR SEQUENTIELLEN MEHRFACHKOLONNENTRENNUNG
MULTI-COLUMN SEQUENTIAL SEPARATION PROCESS

(30) Priorité: 16.06.2006 WO PCT/FR2006/001373
(43) Date de publication de la demande: 01.04.2009
(73) Titulaire: Groupe Novasep, 54340 Pompey (FR)
(72) Inventeur: THEOLEYRE, Marc-André, 75020 Paris (FR); BAUDOUIN, Stanislas, 78410 Aubergenville (FR); MERRIEN, Annick, 78300 Poissy (FR); VALERY, Eric, 54425 Pulnoy (FR); LUDEMANN-HOMBOURGER, Olivier, 54340 Pompey (FR); DAVID, Laurent, 54000 Nancy (FR); HOLZER, Margit, 54130 Dommartemont (FR)
(74) Mandataire: Hirsch & Associés
(86) Numéro de dépôt international: PCT/FR2007/001012
(87) Numéro de publication internationale: WO 2007/144522

(56) Documents cités:
- EP-A1- 0 821 988
- EP-A1- 0 846 483
- WO-A-98/32514
- US-A1- 2003 173 299
- US-B1- 6 419 828

## Description

### DOMAINE DE L'INVENTION

La présente invention a pour objet un procédé de séparation d'adsorption multicolonnes séquencé. L'invention est applicable de façon générale à toute séparation faisant intervenir une interaction produit d'intérêt/phase stationnaire. L'invention s'applique notamment à la purification de molécules d'intérêts notamment les biomolécules, les protéines, les antibiotiques, les acides aminés, les polynucléotides et polypeptides et autres molécules biologiques et chimiques.

### ETAT DE LA TECHNIQUE

Les procédés de purification par chromatographie (en général liquide) se caractérisent par une mise en contact d'une ou plusieurs phase(s) liquide(s) (dite mobile(s)) avec une phase solide (dite stationnaire). Le produit d'intérêt injecté dans la phase liquide établit une ou des interactions de natures diverses avec la phase stationnaire selon la technique de séparation chromatographique choisie: chromatographie en phases directe ou inverse, échange d'ions, affinité, exclusion de taille, interaction hydrophobe, etc... Son déplacement au sein du dispositif chromatographique est donc différent du déplacement des autres produits contenu dans la charge à traiter. Sur la base de cette différence d'interactions, il est possible de purifier ou d'enrichir une des fractions en la molécule d'intérêt.

Par exemple, la production par fermentation d'un acide aminé, tel que la lysine, conduit à un bouillon de culture aqueux contenant l'acide aminé (par exemple la lysine) dissous, des microorganismes et des impuretés pour l'essentiel constituées des résidus de substrats et de métabolisme cellulaire desdits microorganismes. De même, la lysine peut aussi être disponible en association avec d'autres éléments dans une solution aqueuse, qu'il faut purifier pour en extraire la lysine. Les acides aminés et en particulier la lysine sont des compléments alimentaires couramment utilisés dans l'industrie agroalimentaire pour les bestiaux. Ainsi, la séparation des solutions contenant de la lysine, ou tout autre acide aminé, peut se faire par une technique de chromatographie, ici sur une résine échangeuse d'ions.

Dans le domaine des purifications de biomolécules, la molécule cible est contenue dans un mélange complexe, issue par exemple d'un milieu de fermentation (comme dans le cas de la lysine), d'une solution extraite de tissus animaux ou végétaux. La molécule cible s'y trouve en faible concentration et n'est pas dans de nombreux cas l'espèce majoritaire. La purification de ces milieux complexes utilise les techniques de séparation chromatographiques citées préalablement.

Les étapes constitutives d'un procédé de purification peuvent être mises en oeuvre de manières différentes, la plus classique étant le mode dit batch dans lequel chacune des étapes se déroule successivement sur une seule colonne constituée de la phase stationnaire. Afin d'améliorer les possibilités de séparation entre les nombreux constituants présents il est possible dans ce mode fonctionnement batch d'utiliser successivement différents éluants. Ces derniers permettent de modifier les coefficients de partages des différents composés entre la phase stationnaire et la phase liquide éluante. Ainsi une espèce qui aurait une forte affinité pour la phase stationnaire sous certaines conditions d'élution peut tout à fait perdre cette affinité si les conditions d'élution sont modifiées. Cette technique chromatographique utilisant plusieurs éluants nécessite une succession d'étapes. Elle permet d'appliquer un principe de séparation par adsorption puis désorption. Elle permet l'extraction de la molécule souhaitée d'un mélange ou la purification d'une solution par élimination d'une impureté non désirée.

Par exemple, les procédés de purification par échange d'ions sur un support solide, charbon actif ou résine, se caractérisent par une succession d'étapes, répétées de façon cyclique qui peuvent contenir une étape de fixation, élution, et de régénération. Dans certains cas, il peut y avoir plusieurs phases de régénération et de rinçage. Sur la base d'un tel procédé, en batch, la solution la plus rustique pour assurer une production continue est d'avoir au moins deux colonnes, l'une en production, pendant que l'autre subit successivement toutes les étapes de la régénération. La production est alors continue mais les différents flux produits à la régénération ne le sont pas. C'est la recherche d'une disponibilité continue et la limitation des volumes des fluides utilisés en rinçage et régénération qui a poussé les industriels à aller plus loin dans la continuité des opérations.

Malgré leur simplicité, les appareils à lits discontinus restent peu adaptés à certains problèmes d'échange d'ions, notamment lorsque la solution à traiter est très impure. En effet, le volume de résines mis en oeuvre n'est pas calculé en fonction du débit horaire mais en fonction de l'autonomie souhaitée entre deux cycles, ce qui entraîne l'immobilisation de volumes d'échangeur qui peuvent être importants. La recherche de la continuité des opérations est une démarche générale dans l'industrie et dans l'industrie alimentaire en particulier. Les avantages qui en sont attendus sont, outre la continuité des flux, la diminution des volumes des stockages intermédiaires, le dimensionnement au plus juste des appareils pour traiter ces flux moyens, une quantité constante des produits et des effluents.

De nombreux procédés ont été proposés pour réaliser l'échange d'ions en continu.

On a conçu des installations dans lesquelles la résine est déplacée par voie hydraulique ou pneumatique. US-A-2815332 décrit un système en circuit fermé dans lequel la résine progresse à contre-courant du liquide. Cette boucle contient quatre zones isolées par des vannes et dédiées respectivement à la saturation, rinçage, régénération et rinçage. La résine progresse dans les zones et d'un compartiment à l'autre, à contre-courant de la phase liquide, sous l'effet de pulsations hydrauliques. Dans un tel système, on extrait les couches de résines saturées de façon semi-continue, c'est-à-dire par pulsation d'une fréquence de quelques minutes, et l'on remplace par de la résine fraîchement régénérée que l'on introduit du côté où le liquide traité sort de la colonne de fixation. En faisant circuler la résine rapidement, on réduit le volume total de résine mise en oeuvre. Il est indiqué que l'on peut, en particulier, se servir d'une seule installation au lieu de deux fonctionnant alternativement. A l'évidence, de tels systèmes sont très difficiles à mettre en oeuvre.

Certains auteurs ont développé pour la chromatographie un système dit SMB (Simulated Moving Bed). Ainsi, US-A-2985589 décrit un procédé de chromatographie continu, SMB, dans lequel la résine de chromatographie est fixe, répartie dans plusieurs compartiments, mais son déplacement est simulé par le déplacement à intervalle régulier de la position des entrées et des sorties de fluides. Les positions des entrées (alimentation et éluant) et des sorties (extrait et raffinat) définissent alors quatre zones. US-A-6375851 décrit un système à six zones, adaptation à l'échange d'ions du procédé décrit précédemment dans US-A-2985589. Le système décrit dans le document US-A-6375851 est basé sur un SMB, sauf pour l'étape de régénération, qui est mise en oeuvre avec un déplacement de front. Les entrées et sorties de fluides sont donc décalées, en général simultanément, de façon synchrone après une séquence. Le nombre de vannes dans ces systèmes est rédhibitoire, ce qui explique que ces systèmes SMB ionique n'ont jamais été mis en oeuvre de façon industrielle, au profit de la solution AST, actuellement seule solution continue en échange d'ions sur le marché.

On a aussi conçu des installations dans lesquelles la résine est placée dans des colonnes arrangées en manège ou carrousel. On dispose en manège un certain nombre de colonnes élémentaires correspondant à chaque phase du cycle de l'échange d'ions, à savoir, la production, la régénération et les différentes étapes de rinçage. FR-A-1546823 décrit un tel système. Dans ce système, les colonnes de résines sont placées sur une couronne circulaire rotative dont la rotation est commandée par une horloge, et qui amène successivement chaque colonne aux diverses phases du traitement. Les colonnes sont reliées à un distributeur rotatif divisé en autant de cellules qu'il y a de colonnes. Les effluents sont recueillis dans un canal circulaire divisé en autant de sections qu'il y a de phases. Ainsi, chaque colonne passe successivement par toutes les étapes du cycle. US-A-4522726 décrit un système adapté à l'échange d'ions dans lequel les cellules contenant l'adsorbant sont disposées en manège et alimentées par une vanne rotative multivoie distribuant les fluides dans les différents compartiments. Les cellules sont présentées successivement devant les ports de cette vanne alimentée en continu. C'est ce dernier système qui est utilisé actuellement par la société AST dans les dispositifs à 20 ou 30 colonnes montées en manège. Ce système présente plusieurs inconvénients. D'une part le manège avec les colonnes montées est un système complexe, de même que la vanne, dont la construction et la maintenance sont difficiles. En outre, le temps de séquence est déterminé par la plus petite opération unitaire, chaque colonne pendant une séquence subissant une seule opération. Il y a donc nécessairement un nombre important de colonnes pour tenir compte des différences de temps de séquence pour chaque opération unitaire. Par ailleurs, comme les opérations unitaires n'ont pas la même durée, pour opérer le manège, il est donc nécessaire pour certaines opérations unitaires de distribuer du fluide sur 2 ou 3 colonnes, ce qui pose des problèmes d'équilibre hydraulique. En effet, dans la mesure où il est impossible pour des questions de coût de placer des débitmètres de régulation sur chaque conduite arrivant sur chaque colonne, il n'est pas possible d'assurer que la même quantité de fluide s'écoule effectivement dans chaque colonne. Par ailleurs, il n'y a aucune flexibilité dans ce système. De même, US5156736 décrit un lit mobile simulé dans une seule colonne, avec au moins deux injections, deux collectes et une boucle de recyclage, pour la séparation de sucres.

Dans tous ces systèmes, les auteurs prévoient une parfaite continuité de circulation de tous les fluides. Ces systèmes conduisent à un nombre très important de colonnes, la taille des colonnes étant définie par la séquence la plus petite du séquentiel.

US-A-6280623 décrit un système multi-cellules, chaque cellule contenant un ou plusieurs étages avec des solides différents. Le principe de contact entre les phases est le lit fluidisé afin d'améliorer le transfert de matière et une utilisation efficace de la phase stationnaire. La technique décrite n'est pas de la chromatographie.

US-A-6245238 décrit un dispositif de chromatographie par déplacement à basse pression pour échange d'ions, pour des produits pharmaceutiques, peptides, protéines, oligonucléotides et vaccins. Le dispositif permet de relier plusieurs colonnes en série (lors de l'injection de chargement, les colonnes se remplissent) et en parallèle (après chargement, la sortie du produit contenu dans chaque colonne se réalise sur toutes les colonnes en même temps).

Le document US-A-2003 0173299 décrit un procédé de fractionnement d'une solution en deux fractions ou plus par un lit mobile simulé de chromatographie. Le système de séparation comprend au moins deux profils de séparation dans la même boucle.

Le document US-A-6 419 828 décrit un procédé pour sépare un mélange d'acide et de sucres obtenus à suite de l'hydrolyse acide de matériaux cellulosiques ou hémicellulosiques. Le procédé comprend l'addition des liquides à une unité de séparation, permettant la production de premières fractions comprenant des solutions de sucres et des fractions ultérieures comprenant des solutions d'acide.

Le document EP-A-0 821 988 décrit un dispositif de séparation en lit mobile simulé comprenant une pluralité de colonnes chromatographiques, le dispositif étant caractérisé en ce que la ligne de circulation de fluide contenant le produit recherché comprend une ligne de rinçage d'un fluide secondaire entrant (désorbant, fluide avec le produit recherché ou fluide avec le produit recherché appauvri en désorbant) ou d'un fluide sortant (mélange de désorbant et de fluide avec le produit recherché).

Le document EP-A-0 846 483 concerne un dispositif de rinçage dans une unité d'adsorption en lit mobile simulé, à contre-courant ou à co-courant, d'une charge et son utilisation.

Pour les procédés appliqués a des biomolécules, et par exemple les procédés d'échange ionique ou d'affinité, les étapes de production et de régénération sont systématiquement suivies d'étapes de rinçage. En procédé batch, les étapes sont le plus souvent réalisées au débit optimum par rapport à la cinétique de fixation) ou de désorption. En continu, ce n'est pas le cas, et les conditions hydrauliques optimums pour chaque étape du séquentiel ne sont donc pas respectées dans les procédés continus décrits ci-dessus.

### RESUME DE L'INVENTION.

La demanderesse a développé un procédé semi-continu multi-colonnes séquentiel appliqué à la purification de molécules et notamment les biomolécules telles que définies dans la présente invention qui permet d'obtenir, des résultats et des rendements bien meilleurs que ceux existants et ceci à échelle industrielle.

C'est sur la base de ces constatations qu'ont été élaborés les procédés selon l'invention, objet des revendications.

L'invention fournit notamment un procédé pour séparer des biomolécules partir d'une solution aqueuse contenant ladite biomolécule et des impuretés, ayant des affinités et/ou interactions différentes avec le support solide.

L'invention se rapporte à un procédé de séparation sur support solide par rétention sélective séquentiel multicolonnes pour séparer un produit d'intérêt à partir d'une solution contenant un tel produit d'intérêt, par passage de cette solution sur un lit fixe de résine chromatographique et comprenant au moins trois zones, des moyens d'écoulement de liquide étant disposés entre des zones adjacentes et entre la dernière et la première zone, ce procédé comprenant plusieurs séquences, chaque séquence comprenant au moins une étape choisie parmi une étape d'adsorption, une étape de rinçage, une étape de désorption, mise en oeuvre de façon simultanée ou non, chaque séquence suivante est effectuée par le déplacement des fronts dans les zones vers l'aval sensiblement d'un même incrément avant le déplacement périodique des points d'introduction et de soutirage caractérisé en ce que le procédé comprend une sous-séquence sans injection de la charge.

Plus spécifiquement, l'invention fournit aussi un procédé de séparation sur support solide par rétention sélective séquentiel multicolonnes pour séparer un produit d'intérêt à partir d'une solution contenant un tel produit d'intérêt, par passage de cette solution sur un lit fixe de résine chromatographique et comprenant au moins trois zones, des moyens d'écoulement de liquide étant disposés entre des zones adjacentes et entre la dernière et la première zone, ce procédé comprenant plusieurs séquences, chaque séquence comprenant les étapes d'adsorption, de rinçage, de désorption, mises en oeuvre de façon simultanée ou non, chaque séquence suivante est effectuée par le déplacement des fronts dans les zones vers l'aval sensiblement d'un même incrément avant le déplacement périodique des points d'introduction et de soutirage, le procédé comprenant une sous-séquence sans injection de la charge. Le procédé comprend le déplacement du point d'introduction de charge. En outre, le procédé est semi-continu.

L'invention fournit aussi un procédé pour séparer un produit d'intérêt à partir d'une solution contenant un tel produit d'intérêt et des impuretés, par passage de cette solution sur un lit fixe de résine chromatographique et comprenant au moins quatre zones en série, des moyens d'écoulement de liquide étant disposés entre des zones adjacentes et entre la dernière et la première zones, ledit produit d'intérêt étant sélectivement retenu par contact avec ladite résine chromatographique et au moins l'une des impuretés étant relativement moins retenue sur cette résine chromatographique que ledit produit d'intérêt, résine chromatographique qui est régénérée par l'action d'un régénérant, caractérisé en ce qu'il comprend plusieurs séquences, chaque séquence comprenant au moins une des étapes suivantes :
(a) introduire un certain volume d'une solution de rinçage à l'entrée de la première zone et soutirer sensiblement simultanément le même volume d'un liquide dilué en ledit produit d'intérêt, au niveau d'un point situé en aval de cette zone;
(b) introduire un certain volume de ladite solution de charge à l'entrée de la deuxième zone et soutirer sensiblement simultanément le même volume d'un liquide riche en la ou les impuretés relativement moins retenue, au niveau d'un point situé en aval de cette zone;
(c) introduire un certain volume d'une solution de rinçage à l'entrée de la troisième zone et soutirer sensiblement simultanément le même volume d'un liquide dilué en régénérant, au niveau d'un point situé en aval de cette zone;
(d) introduire un certain volume de régénérant à l'entrée de la quatrième zone et soutirer sensiblement simultanément le même volume d'un liquide dilué, au niveau d'un point situé en aval de cette zone;
(e) introduire un certain volume d'un éluant à l'entrée de la cinquième zone et soutirer sensiblement simultanément le même volume d'un liquide riche en ledit produit d'intérêt, au niveau d'un point situé en aval de cette zone;
   les étapes (a), (b), (c), (d) et (e) pouvant être mises en oeuvre de façon simultanée ou non;
   chaque séquence suivante étant effectuée par le déplacement périodique vers l'aval, sensiblement d'un même incrément de volume, des points d'introduction et de soutirage,
   et comprenant en outre une étape
(f) déplacement des fronts dans au moins la zone (b) avant le déplacement périodique.

L'invention fournit aussi un procédé pour séparer un produit d'intérêt à partir d'une solution contenant un tel produit d'intérêt et des impuretés, par passage de cette solution sur un lit fixe de résine chromatographique et comprenant au moins quatre zones en série, des moyens d'écoulement de liquide étant disposés entre des zones adjacentes et entre la dernière et la première zones, ledit produit d'intérêt étant sélectivement retenu par contact avec ladite résine chromatographique et au moins l'une des impuretés étant relativement moins retenue sur cette résine chromatographique que ledit produit d'intérêt, résine chromatographique qui est régénérée par l'action d'un régénérant, caractérisé en ce qu'il comprend plusieurs séquences, chaque séquence comprenant au moins une des étapes suivantes :
(a) introduire un certain volume d'une solution de rinçage à l'entrée de la première zone et soutirer sensiblement simultanément le même volume d'un liquide dilué en ledit produit d'intérêt, au niveau d'un point situé en aval de cette zone;
(b) introduire un certain volume de ladite solution de charge à l'entrée de la deuxième zone et soutirer sensiblement simultanément le même volume d'un liquide riche en la ou les impuretés relativement moins retenue, au niveau d'un point situé en aval de cette zone;
(e) introduire un certain volume d'un éluant à l'entrée de la troisième zone et soutirer sensiblement simultanément le même volume d'un liquide riche en ledit produit d'intérêt, au niveau d'un point situé en aval de cette zone;
   les étapes (a), (b) et (e) pouvant être mises en oeuvre de façon simultanée ou non; chaque séquence suivante étant effectuée par le déplacement périodique vers l'aval, sensiblement d'un même incrément de volume, des points d'introduction et de soutirage,
   et comprenant en outre une étape
(f) déplacement des fronts dans au moins la zone (b) avant le déplacement périodique.

L'invention fournit aussi un procédé pour séparer un produit d'intérêt à partir d'une solution contenant un tel produit d'intérêt et des impuretés, par passage de cette solution sur un lit fixe de résine chromatographique et comprenant au moins quatre zones en série, des moyens d'écoulement de liquide étant disposés entre des zones adjacentes et entre la dernière et la première zones, ledit produit d'intérêt étant sélectivement retenu par contact avec ladite résine chromatographique et au moins l'une des impuretés étant relativement moins retenue sur cette résine chromatographique que ledit produit d'intérêt, résine chromatographique qui est régénérée par l'action d'un régénérant, caractérisé en ce qu'il comprend plusieurs séquences, chaque séquence comprenant les étapes suivantes :
(a) introduire un certain volume d'une solution de rinçage à l'entrée de la première zone et soutirer sensiblement simultanément le même volume d'un liquide dilué en ledit produit d'intérêt, au niveau d'un point situé en aval de cette zone;
(b) introduire un certain volume de ladite solution de charge à l'entrée de la deuxième zone et soutirer sensiblement simultanément le même volume d'un liquide riche en la ou les impuretés relativement moins retenue, au niveau d'un point situé en aval de cette zone;
(c) introduire un certain volume d'une solution de rinçage à l'entrée de la troisième zone et soutirer sensiblement simultanément le même volume d'un liquide dilué en régénérant, au niveau d'un point situé en aval de cette zone;
(d) introduire un certain volume de régénérant à l'entrée de la quatrième zone et soutirer sensiblement simultanément le même volume d'un liquide dilué, au niveau d'un point situé en aval de cette zone;
(e) introduire un certain volume d'un éluant à l'entrée de la cinquième zone et soutirer sensiblement simultanément le même volume d'un liquide riche en ledit produit d'intérêt, au niveau d'un point situé en aval de cette zone;
   les étapes (a), (b), (c), (d) et (e) pouvant être mises en oeuvre de façon simultanée ou non;
   chaque séquence suivante étant effectuée par le déplacement périodique vers l'aval, sensiblement d'un même incrément de volume, des points d'introduction et de soutirage,
   et comprenant en outre une étape
(f) déplacement des fronts dans au moins la zone (b) avant le déplacement périodique.

L'invention fournit aussi un procédé pour séparer un produit d'intérêt à partir d'une solution contenant un tel produit d'intérêt et des impuretés, par passage de cette solution sur un lit fixe de résine chromatographique et comprenant au moins quatre zones en série, des moyens d'écoulement de liquide étant disposés entre des zones adjacentes et entre la dernière et la première zones, ledit produit d'intérêt étant sélectivement retenu par contact avec ladite résine chromatographique et au moins l'une des impuretés étant relativement moins retenue sur cette résine chromatographique que ledit produit d'intérêt, résine chromatographique qui est régénérée par l'action d'un régénérant, caractérisé en ce qu'il comprend plusieurs séquences, chaque séquence comprenant au moins une des étapes suivantes :
(a) introduire un certain volume d'une solution d'équilibrage à l'entrée de la première zone et soutirer sensiblement simultanément le même volume d'un liquide composé d'abord de solution de régénération puis de la solution d'équilibrage, au niveau d'un point situé en aval de cette zone;
(b) introduire un certain volume de la solution de charge à traiter contenant le produit d'intérêt à l'entrée de la deuxième zone et soutirer sensiblement simultanément le même volume d'un liquide contenant la ou les impuretés relativement moins retenue, au niveau d'un point situé en aval de cette zone;
(c) introduire un certain volume d'une solution de rinçage à l'entrée de la troisième zone et soutirer sensiblement simultanément le même volume d'un liquide dilué en la ou les impuretés relativement moins retenues que le produit d'intérêt, au niveau d'un point situé en aval de cette zone;
(d) introduire un certain volume de solution d'élution à l'entrée de la quatrième zone et soutirer sensiblement simultanément le même volume d'un liquide, contenant le produit d'intérêt, au niveau d'un point situé en aval de cette zone;
(e) introduire un certain volume d'une solution de régénération à l'entrée de la cinquième zone et soutirer sensiblement simultanément le même volume d'un liquide contenant les impuretés les plus retenues, au niveau d'un point situé en aval de cette zone;
   les étapes (a), (b), (c), (d) et (e) pouvant être mises en oeuvre de façon simultanée ou non;
   chaque séquence suivante étant effectuée par le déplacement périodique vers l'aval, sensiblement d'un même incrément de volume, des points d'introduction et de soutirage,
   et comprenant en outre une étape
(f) déplacement des fronts dans au moins la zone (c) avant le déplacement périodique.

L'invention fournit aussi un procédé pour séparer un produit d'intérêt à partir d'une solution contenant un tel produit d'intérêt et des impuretés, par passage de cette solution sur un lit fixe de résine chromatographique et comprenant au moins quatre zones en série, des moyens d'écoulement de liquide étant disposés entre des zones adjacentes et entre la dernière et la première zones, ledit produit d'intérêt étant sélectivement retenu par contact avec ladite résine chromatographique et au moins l'une des impuretés étant relativement moins retenue sur cette résine chromatographique que ledit produit d'intérêt, résine chromatographique qui est régénérée par l'action d'un régénérant, caractérisé en ce qu'il comprend plusieurs séquences, chaque séquence comprenant au moins une des étapes suivantes :
(b) introduire un certain volume de la solution de charge à traiter contenant le produit d'intérêt à l'entrée de la première zone et soutirer sensiblement simultanément le même volume d'un liquide contenant la ou les impuretés relativement moins retenue, au niveau d'un point situé en aval de cette zone;
(c) introduire un certain volume d'une solution de rinçage à l'entrée de la deuxième zone et soutirer sensiblement simultanément le même volume d'un liquide dilué *en la ou les impuretés relativement moins retenues que le produit d'intérêt, au niveau d'un point situé en aval de cette zone;
(e) introduire un certain volume d'une solution de régénération à l'entrée de la troisième zone et soutirer sensiblement simultanément le même volume d'un liquide contenant les impuretés les plus retenues, au niveau d'un point situé en aval de cette zone;
   les étapes (b), (c) et (e) pouvant être mises en oeuvre de façon simultanée ou non; chaque séquence suivante étant effectuée par le déplacement périodique vers l'aval, sensiblement d'un même incrément de volume, des points d'introduction et de soutirage,
   et comprenant en outre une étape
(f) déplacement des fronts dans au moins la zone (c) avant le déplacement périodique.

Selon un mode de réalisation, les étapes (d), et (e) sont mise en oeuvre avec un même fluide, ces étapes correspondant alors à une étape consistant à:
(d) introduire un certain volume de régénérant à l'entrée de la quatrième zone et soutirer sensiblement simultanément le même volume d'un liquide riche en ledit produit d'intérêt, au niveau d'un point situé en aval de cette zone;
les quatrième et cinquième zones étant alors confondue en une seule quatrième zone.

Selon un mode de réalisation, les étapes (a), (b), (c) et (d) sont mises en oeuvre au moins en partie simultanément.

Selon un mode de réalisation, ledit déplacement des fronts déplace les fronts de façon synchrone dans les différentes zones.

Selon un mode de réalisation, le déplacement des fronts comprend les étapes suivantes:
(i) créer d'une zone boucle de circulation entre les différentes zones, de la première zone à la cinquième zone; et
(ii) mettre en circulation dans ladite boucle pour déplacer les fronts.

Selon un mode de réalisation, le déplacement des fronts comprend les étapes suivantes:
(i) créer une première zone de déplacement par liaison fluide de la sortie de la première zone à l'entrée de la deuxième zone et par liaison fluide de la sortie de la deuxième zone à l'entrée de la troisième zone, et déplacement vers l'aval de l'entrée de la première zone pour fournir l'entrée de la première zone de déplacement et déplacement vers l'amont de la sortie de la troisième zone pour fournir la sortie de la première zone de déplacement; et
   créer une deuxième zone de déplacement par liaison fluide de la sortie de la troisième zone à l'entrée de la quatrième zone et par liaison fluide de la sortie de la quatrième zone à l'entrée de la cinquième zone et liaison fluide de la sortie de la cinquième zone à l'entrée de la première zone, et déplacement vers l'aval de l'entrée de la troisième zone pour fournir l'entrée de la deuxième zone de déplacement et déplacement vers l'amont de la sortie de la première zone pour fournir la sortie de la deuxième zone de déplacement; et
(ii) introduire un certain volume de solution de rinçage à l'entrée de la première zone de déplacement et soutirer sensiblement simultanément le même volume de solution de rinçage récupérée en sortie de la première zone de déplacement.
(iii) introduire un certain volume de solution de rinçage à l'entrée de la deuxième zone de déplacement et soutirer sensiblement simultanément le même volume de solution de rinçage récupérée en sortie de la deuxième zone de déplacement.

Selon un mode de réalisation, ledit déplacement des fronts déplace les fronts de façon asynchrone dans les différentes zones.

Selon un mode de réalisation, le déplacement des fronts comprend les étapes suivantes:
(i) créer une première zone d'un premier déplacement par liaison fluide de la sortie de la première zone à l'entrée de la deuxième zone et par liaison fluide de la sortie de la deuxième zone à l'entrée de la troisième zone; et
   créer une deuxième zone d'un premier déplacement par liaison fluide de la sortie de la troisième zone à l'entrée de la quatrième zone et par liaison fluide de la sortie de la quatrième zone à l'entrée de la cinquième zone et par liaison fluide de la sortie de la cinquième zone à l'entrée de la première zone; et
(ii) introduire un certain volume de ladite solution à l'entrée de la première zone de déplacement et soutirer sensiblement simultanément le même volume le même volume d'un liquide dilué en régénérant en sortie de la première zone d'un premier déplacement;
(iii) introduire un certain volume de régénérant à l'entrée de la deuxième zone de déplacement et soutirer sensiblement simultanément le même volume d'un liquide dilué en ledit produit d'intérêt en sortie de la deuxième zone d'un premier déplacement;
(iv) créer une première zone d'un second déplacement par liaison fluide de la sortie de la première zone à l'entrée de la deuxième zone et par liaison fluide de la sortie de la deuxième zone à l'entrée de la troisième zone, et déplacement vers l'aval de l'entrée de la première zone pour fournir l'entrée de la première zone d'un second déplacement et déplacement vers l'amont de la sortie de la troisième zone pour fournir la sortir de la première zone d'un second déplacement; et
   créer une deuxième zone d'un second déplacement par liaison fluide de la sortie de la troisième zone à l'entrée de la quatrième zone et par liaison fluide de la sortie de la quatrième zone à l'entrée de la cinquième zone et liaison fluide de la sortie de la cinquième zone à l'entrée de la première zone, et déplacement vers l'aval de l'entrée de la troisième zone pour fournir l'entrée de la deuxième zone de déplacement et déplacement vers l'amont de la sortie de la première zone pour fournir la sortie de la deuxième zone de déplacement; et
(vi) introduire un certain volume de solution de rinçage à l'entrée de la première zone d'un second déplacement et soutirer sensiblement simultanément le même volume d'un liquide riche en la ou les impuretés relativement moins retenue en sortie de la première zone d'un second déplacement.
(vii) introduire un certain volume de solution de rinçage à l'entrée de la deuxième zone d'un second déplacement et soutirer sensiblement simultanément le même volume d'un liquide riche en ledit produit d'intérêt en sortie de la deuxième zone d'un second déplacement.

Selon un mode de réalisation, les première, deuxième, troisième, quatrième et cinquième zones comprennent au moins une colonne, de préférence au moins deux colonnes.

Selon un mode de réalisation, l'étape (f) comprend un déplacement des fronts dans toutes les zones avant le déplacement périodique.

Selon un mode de réalisation, le déplacement périodique des points d'injection est effectué d'une zone en une zone.

Selon un mode de réalisation, le déplacement périodique des points d'injection est effectué d'une colonne en une colonne.

Selon un mode de réalisation, le déplacement périodique des points d'injection est effectué de deux colonnes en deux colonnes.

Selon un mode de réalisation, les lesdites zones comprennent au moins une colonne, de préférence au moins deux colonnes.

Selon un mode de réalisation, l'incrément de volume suivant lequel sont déplacés lesdits points d'introduction et lesdits points de soutirage correspond sensiblement au volume d'une fraction entière d'une zone de matière absorbante.

Selon un mode de réalisation, l'incrément de volume suivant lequel sont déplacés lesdits points d'introduction et lesdits points de soutirage correspond sensiblement au volume d'une colonne.

Selon un mode de réalisation, les colonnes sont munies de vannes multivoies.

Selon un mode de réalisation, le déplacement périodique des étapes est synchrone.

Selon un mode de réalisation, le déplacement périodique des étapes est asynchrone.

Selon un mode de réalisation, ledit liquide dilué en ledit produit d'intérêt est au moins en partie envoyé vers l'étape (b).

Selon un mode de réalisation, il existe une zone supplémentaire, et le procédé comprend en outre une étape (g) introduire tout ou partie du liquide dilué en ledit produit d'intérêt obtenu à l'étape (a) au niveau de ladite zone supplémentaire, et récupérer sensiblement le même volume en solution de rinçage au niveau d'un point situé en aval de cette zone.

Selon un mode de réalisation, l'étape (b) comprend deux sous-étapes (b1) et (b2), ainsi qu'une étape intermédiaire d'ajustement d'un paramètre de la solution, notamment par modification du pH.

Selon un mode de réalisation, ledit liquide dilué en régénérant obtenu à l'étape (c) est au moins en partie envoyé vers l'étape (d), éventuellement après avoir été complété.

Selon un mode de réalisation, les solutions de rinçage récupérées sont au moins en partie renvoyée vers les étapes (a) et/ou (c).

Selon un mode de réalisation, la chromatographie est une chromatographie d'échange ionique et le produit d'intérêt est un acide aminé, de préférence de la lysine.

Selon un mode de réalisation, la chromatographie est une chromatographie d'échange ionique et le produit d'intérêt est l'insuline.

Selon un mode de réalisation, la chromatographie est une chromatographie d'affinité et le produit d'intérêt est l'IgG.

Selon un mode de réalisation, la chromatographie est une chromatographie d'affinité et le produit d'intérêt est une protéine ou une biomolécule.

De préférence, le solvant (ou tampon) de la solution de rinçage est différent du solvant (ou tampon) de la solution de désorption (pH, composition, force éluante...) ; de préférence, le solvant (ou tampon) de la solution de rinçage est le même que le solvant (ou tampon) d'adsorption (pH, composition, force éluante...).

### BREVE DESCRIPTION DES FIGURES.

- La figure 1 est une représentation schématique d'un mode de réalisation en SMB selon l'état de la technique;
- La figure 2 est une représentation schématique d'une colonne dans son environnement dans une installation selon un mode de réalisation de l'invention.
- La figure 3 est une représentation schématique d'un premier mode de réalisation;
- La figure 4 est une représentation schématique d'un second mode de réalisation;
- La figure 5 est une représentation schématique d'un troisième mode de réalisation;
- La figure 6 est une représentation schématique d'un quatrième mode de réalisation;
- La figure 7 illustre un exemple de chargement partiel d'une colonne avec une charge contenant par exemple une immunoglobuline sur une phase stationnaire contenant par exemple un ligand protéine A;
- La figure 8 illustre le chargement de trois colonnes de volume tiers de celui de la colonne de la figure 7;
- La figure 9 est une représentation schématique d'un mode de réalisation en SMB selon l'état de la technique;
- La figure 10 est une représentation schématique d'un déplacement des fronts correspondant à une séquence de transition selon l'invention selon un mode de réalisation;
- La figure 11 est une représentation schématique d'un déplacement asynchrone d'une ligne d'injection de rinçage selon l'invention selon un autre mode de réalisation;
- La figure 12 est une représentation schématique d'un déplacement asynchrone de la ligne de charge avec une séquence de transition selon l'invention selon un autre mode de réalisation;
- La figure 13 représente un procédé selon l'invention avec 6 lignes de fluides.
- La figure 14 représente les différentes séquences d'un procédé selon l'invention mis en oeuvre avec 5 fluides ;
- La figure 15 représente les différentes séquences pour la séparation de l'IgG ;
- La figure 16 représente les différentes séquences pour la séparation de l'insuline.

Dans ces figures, les symboles suivants sont utilisés:

| | |
|---|---|
| W | eau |
| FD | lysine diluée |
| F | solution aqueuse de lysine - solution de charge ou « feed » contenant une molécule d'intérêt (par exemple lysine, insuline, IgG humaine) |
| RAF | raffinat |
| RD | solution de régénération diluée |
| R | régénérant |
| EXT | extrait |
| Lysine displ | déplacement de lysine |
| Ads | adsorption |
| Pre ads | préadsorption |
| Water displ. | déplacement à l'eau (rincage) |
| Water | eau |
| NH₃ displ. | déplacement à l'eau (régénération) |
| Spare | en attente |
| Wash | lavage |
| Rege | régénération |
| Wash neutral | lavage neutre |
| Acidified water | eau acide |
| Waste | effluent |

### DESCRITION DETAILLEE DE MODES DE REALISATION DE L'INVENTION.

Selon la présente invention, on entend par biomolécules, toutes molécules isolées et purifiées issues d'un matériel biologique, incluant sans être limitatif les acides aminés, protéines, peptides, hormones, antibiotiques, anticorps, enzymes, composant de la membrane cellulaire comme les phospholipides etc. ainsi que leurs formes recombinantes ou marquées par des marqueurs fluorescents chaud ou froid bien connus de l'homme du métier.

Selon l'invention, la molécule d'intérêt peut être la molécule la plus retenue par la phase stationnaire mais aussi la molécule la moins retenue par la phase stationnaire. On citera à titre d'exemple que lorsqu'on utilise le procédé d'adsorption selon l'invention pour la séparation des endotoxines, les toxines sont les molécules les plus retenues par la phase stationnaire et la molécule d'intérêt la moins retenue.

Selon la présente invention on entend par étape d'adsorption une étape au cours de laquelle on injecte de la charge contenant la molécule à séparer, un ou plusieurs des produits contenus dans la charge vont alors se fixer sur la phase solide. Cette étape correspond à un chargement de la phase.

Selon la présente invention on entend par étape de désorption une étape au cours de laquelle le ou les produits qui sont fixés sur le support solide passe dans la phase liquide. Un procédé d'adsorption comprend donc de façon naturelle au moins une étape d'adsorption et au moins une étape de désorption.

Selon la présente invention, on entend par étape de rinçage une étape entre une étape d'adsorption et de désorption ou inversement permettant de renouveler la phase liquide contenue dans la ou les colonnes. La dénomination étape de lavage peut également correspondre à cette étape.

Le procédé de l'invention permet une meilleure optimisation des séquences de chargement de la solution aqueuse à traiter et de rinçage des produits séparés; ceci conduit à une réduction des volumes utilisés et à une moindre production de sous-produits.

Par ailleurs, le procédé selon l'invention offre encore un ou plusieurs des avantages suivants:
- design mécanique qui permet d'éviter les pièces en mouvement, puisque les colonnes sont fixes, le manège n'étant plus nécessaire. Les colonnes sont compactes et il est possible d'utiliser des vannes multivoies sur chaque colonne.
- maintenance simplifiée, car on peut avoir une colonne qui est séparée du cycle sans avoir à stopper le procédé, pour changement de la résine ou support chromatographique, maintenance générale, etc... Les exigences de maintenance se rapprochent de celles d'un procédé discontinu, connues pour être relativement peu élevées.
- le contrôle de procédé est simple, puisqu'il suffit de changer les paramètres de l'automate pour modifier le procédé et ajuster les zones du procédé (aucune pièce mécanique n'est à changer). Il est en outre possible d'utiliser un débitmètre sur chaque colonne, pour chaque étape de procédé.
- les extensions de capacité sont faciles à mettre en oeuvre, en additionnant simplement des colonnes aux colonnes existantes et en modifiant les paramètres de procédé pour modifier les zones.
- l'emprise au sol est aussi plus faible qu'avec un système de l'état de la technique utilisant un manège.

Ces avantages, ainsi que d'autres, seront explicités le cas échéant dans la description qui suit.

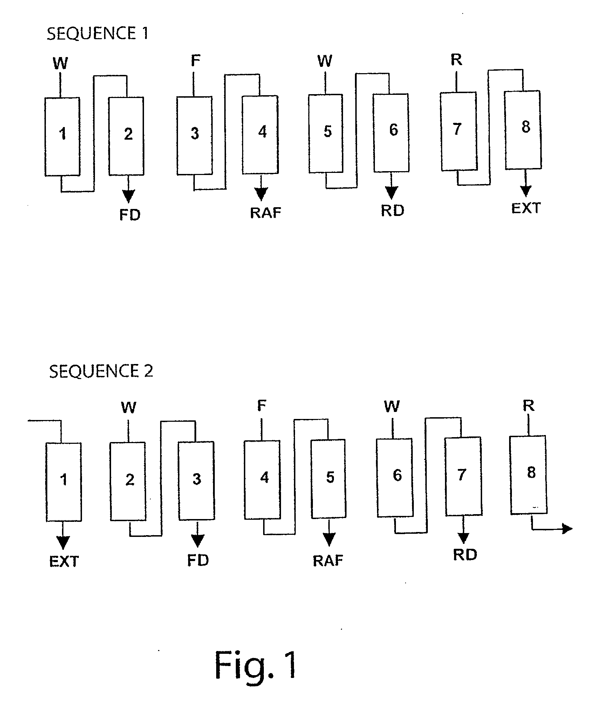

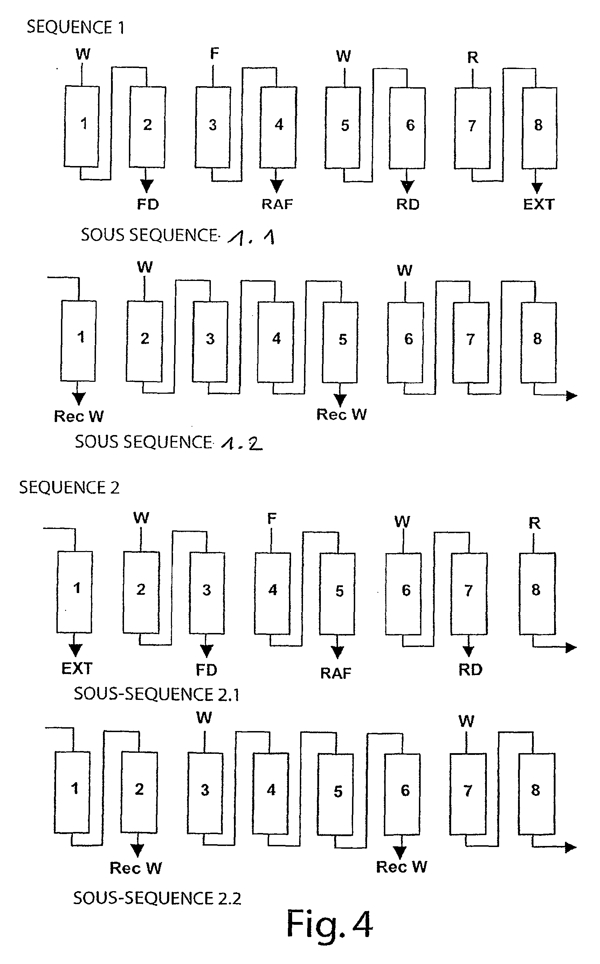

Pour les figures 1, 3 à 6, la description est donnée en référence à un acide aminé spécifique, la lysine, mais il est entendu que le procédé selon l'invention s'applique à tous les acides aminés et plus généralement à toutes les biomolécules selon l'invention, et s'applique à tout type de chromatographie bien connu de l'homme du métier.

Pour mémoire, on rappellera que biomolécule est considérée, pour l'échange ionique, comme l'extrait (X) car il est plus échangé et que les impuretés moins échangées sont considérées comme un raffinat (R). Dans l'invention, la pureté dans l'extrait est supérieure par exemple à 95%, de préférence supérieure à 98%, avantageusement supérieure à 99%. On utilisera les mêmes conventions pour les autres exemples dans la présente demande, le terme "plus retenu" ou "moins retenu" étant utilisé lors qu'il n'y a pas d'échange ionique.

Les résines échangeuses d'ions sont classiques, de même que les solutions de rinçage et de régénération. Par exemple les résines selon l'invention peuvent être choisies parmi les résines d'affinité, ioniques, phases directe ou inverse, d'interaction hydrophobe, d'exclusion de taille, etc.. De ce point de vue, l'invention ne se démarque pas de l'état de la technique des échanges ioniques. On peut utiliser des résines anioniques ou cationiques, faibles ou fortes, selon le cas à traiter.

On peut aussi utiliser plusieurs systèmes en série; notamment on peut effectuer une déminéralisation par utilisation d'un premier système avec des résines cationiques suivi d'un deuxième système avec des résines anioniques.

On notera que lorsque la biomolécule est un acide aminé comme la lysine, la solution aqueuse peut être le bouillon de culture obtenu par fermentation générant de la ledit acide aminé. On utilise alors l'eau comme éluant dans l'invention. On peut en fait utiliser un bouillon de culture comme produit de départ pour tout type de séparation, en adaptant les résines dans les colonnes.

Ladite solution aqueuse contenant la biomolécule peut être obtenue par clarification du bouillon de culture, cette clarification pouvant comprendre une centrifugation et/ou une filtration sur membrane, de préférence une filtration sur membrane.

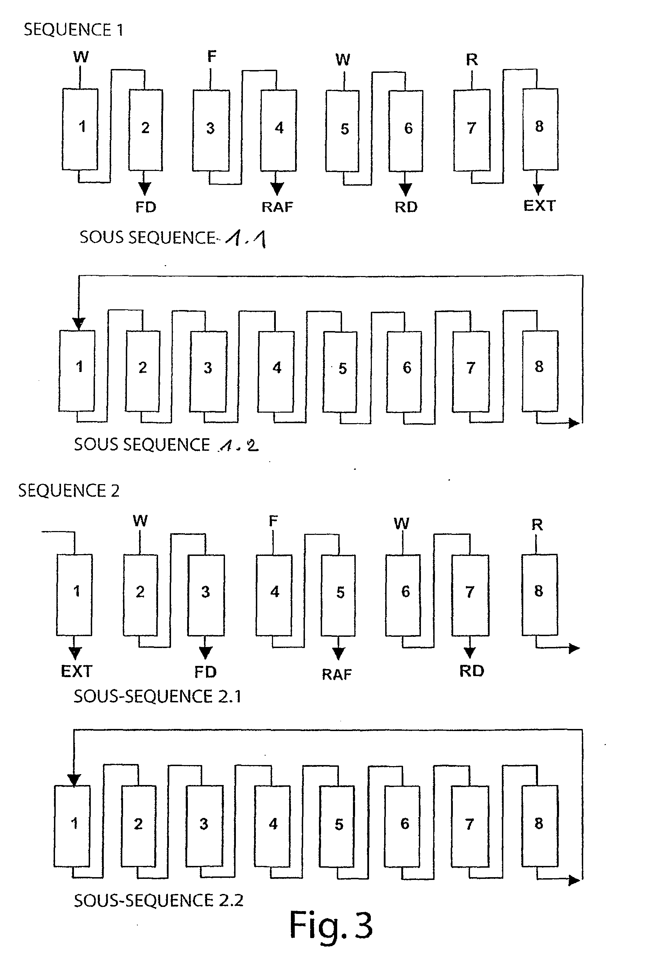

La présente invention est illustrée à titre d'exemple par la description ci-après de trois modes de réalisation, faite en référence aux figures 3 à 5 des dessins annexés, tandis que la figure 1 décrit un mode de réalisation selon l'état de la technique. La lysine est prise comme un exemple représentatif d'un acide aminé, lui-même représentatif d'une substance à purifier dans un procédé de chromatographie par échange ionique, lui-même représentatif d'un procédé de chromatographie générique auquel s'applique l'invention.

En référence à la figure 1, l'installation comprend huit colonnes 1, 2, 3, 4, 5, 6, 7 et 8 garnies de résine échangeuse d'ions. Le fonctionnement de cette installation de type SMB selon l'état de la technique est expliqué infra. Il convient de garder à l'esprit que les étapes de décalage vont de la gauche vers la droite, ceci correspond en fait à un déplacement des colonnes de la droite vers la gauche.

L'étape (a) comprend les actes visant à introduire un certain volume d'eau W à l'entrée de la colonne 1 et soutirer sensiblement simultanément le même volume de lysine diluée en sortie de la colonne 2, les colonnes 1 et 2 formant la première zone. Lors de l'introduction de l'eau, au tout début de la phase, il convient de garder à l'esprit que du fait du décalage, la colonne 1 est donc en fait la colonne 2 juste précédemment (avant le décalage). La colonne 2 juste précédemment est remplie de la solution de lysine diluée (celle qui n'a pas été fixée par échange ionique). Le front d'eau pure se déplace donc vers le bas, et la colonne 1 passe donc d'un état "lysine diluée" (étant entendu qu'il y a de la lysine échangée dans cette colonne) à un état "eau" (avec de la lysine échangée dans cette colonne). La colonne 2, qui est la colonne 3 juste précédemment, passe d'un état "lysine" (avec de la lysine échangée fixée) à un état "lysine diluée" (avec de la lysine échangée fixée), et on récupère de la solution de lysine à purifier à l'état dilué en pied de la colonne 2, d'abord relativement concentrée puis de plus en plus diluée. En effet sur cette colonne il n'y a plus de sites d'échange disponibles et donc la solution diluée élue simplement le long de cette colonne; il s'agit d'un déplacement de solution de lysine. Cette solution diluée récupérée est typiquement renvoyée vers le tank de départ de la solution à purifier, ou alors directement en tête de la colonne 3.

L'étape (b) comprend les actes visant à introduire un certain volume de ladite solution aqueuse à l'entrée de la colonne 3 et soutirer sensiblement simultanément le même volume d'un liquide riche en raffinat à la sortie de la colonne 4. La colonne 3 est alimentée en solution de lysine, mais cette colonne correspond à la colonne 4 immédiatement avant, donc à une colonne déjà échangée partiellement en lysine, et contenant aussi de la lysine diluée qui n'a pas été échangée. De même, la colonne 4 correspond à la colonne 5, mais immédiatement précédemment et donc une colonne avec de l'eau. La colonne 4 est une colonne de préadsorption puisqu'elle reçoit une solution de lysine épuisée par la colonne 3. Dans la colonne 3, la solution de lysine est injectée et un front de saturation progresse dans la colonne 3, tandis que le front de la solution de lysine à purifier et qui s'échange sur les sites progresse dans la colonne 4 (colonne de préadsorption). A la sortie de la colonne 4, on récupère le raffinat, à savoir les éléments de la solution à traiter qui n'ont pas été échangés avec la résine, en partant d'une solution très diluée vers une solution plus concentrée en raffinat.

L'étape (c) comprend les actes visant à introduire un certain volume d'eau à l'entrée de la colonne 5 et soutirer sensiblement simultanément le même volume d'un liquide dilué en régénérant à la sortie de la colonne 6. La colonne 5 est alimentée avec de l'eau, tandis que de la colonne 6 sort du régénérant dilué. En effet, la colonne 6 est la colonne 7 juste avant le décalage et donc juste après le décalage elle reçoit ce qui sort de la colonne 5, à savoir de l'eau avec un peu de régénérant. Ce qui sort de la colonne 6 est donc du régénérant dilué.

L'étape (d) comprend les actes visant à introduire un certain volume de régénérant à l'entrée de la colonne 7 et soutirer sensiblement simultanément le même volume d'un liquide riche en l'acide aminé à la sortie de la colonne 8. La colonne 7 est alimentée en régénérant, et est reliée à la colonne 8. Cette colonne 8 est la colonne 1 juste avant le décalage et donc juste après le décalage on alimente la colonne 8 avec du régénérant ce qui fait que le front de régénérant progresse dans la colonne 8, et on récupère l'extrait alors en pied de la colonne 8, d'abord dilué puis de plus en plus concentré et lorsque la quantité récupérée commence à diminuer on décale les étapes.

A la fin d'une séquence donné N, on a donc en tête de la colonne 1 de l'eau et de la lysine échangée fixée sur la résine. En tête de la colonne 2 on a de la lysine échangée, de l'eau et un reste de solution de lysine à purifier. En tête de la colonne 3 on a de la lysine complètement échangée, avec de la solution de lysine à purifier. En tête de la colonne 4, on a partiellement de la lysine échangée (tous les sites ne sont pas échangés) et du raffinat (partie de la solution de lysine à purifier qui ne s'est pas fixée) et un reste de solution de lysine à purifier. En tête de la colonne 5, on a de l'eau de rinçage et les sites de la résine prêts à échanger. En tête de la colonne 6, on a de l'eau de rinçage diluée avec du régénérant, les sites étant régénérés. En tête de la colonne 7, on a des sites complètement régénérés (prêts à échanger de la lysine) et de la solution de régénération. En tête de la colonne 8, on a des sites partiellement régénérés et de la solution de régénération diluée et de l'extrait (partiellement).

Donc au tout début de la séquence suivant N+1, et en référence à un schéma dans lequel les colonnes sont déplacées vers la gauche par déplacement des points d'injection et de soutirage vers la droite, on a alors les positions suivantes. De l'eau est envoyée sur la colonne 2 qui présente en tête de la lysine échangée, de l'eau et un reste de solution de lysine à purifier. En tête de la colonne 3 on a de la lysine complètement échangée, avec de la solution de lysine à purifier, qui va recevoir alors ce qui sort de la colonne 2. En tête de la colonne 4, on a partiellement de la lysine échangée (tous les sites ne sont pas échangés) et du raffinat (partie de la solution de lysine à purifier qui ne s'est pas fixée) et un reste de solution de lysine à purifier, et cette colonne reçoit alors la solution de lysine à purifier. En tête de la colonne 5, on a de l'eau de rinçage et les sites de la résine prêts à échanger, et qui reçoit ce qui sort de la colonne 4, à savoir du raffinat et de la solution de lysine appauvrie qui va s'échanger sur cette colonne de préadsorption. En tête de la colonne 6, on alimente de l'eau de rinçage sur une colonne ayant des sites régénérés, et contenant de la solution de régénérant diluée. La colonne 7 qui a aussi des sites complètement régénérés (prêts à échanger de la lysine) reçoit alors de l'eau de la colonne 6 et de la solution de régénération diluée qui est soutirée en pied. En tête de la colonne 8, on des sites partiellement régénérés et de la solution de régénération diluée, et on alimente avec une solution de régénérant.

Les flux qui vont venir en tête des colonnes seront donc les suivants. En tête de la colonne 2 la solution à purifier vient sur une colonne ayant en tête déjà de la lysine partiellement échangée. Il y a donc une rupture des fronts et un gradient qui n'est pas respecté. En tête de la colonne 8 la solution de régénération vient sur une colonne partiellement régénérée avec du régénérant dilué, et donc on procède localement à un mélange de régénérant pur avec du régénérant impur. A nouveau on ne respecte pas le gradient.

On voit donc que le système de SMB classique, appliqué au domaine des résines échangeuses d'ions, s'il présente l'avantage d'être continu n'est est pas moins exempt de défauts, qui sont surtout sensibles au niveau de la régénération.

L'invention permet grâce à une étape de déplacement des fronts dans les zones avant le déplacement périodique, de s'affranchir de ce problème et de respecter les gradients. L'étape de déplacement des fronts se fait typiquement d'une colonne. La description qui suit fait référence à trois modes de réalisation. Le déplacement des fronts se fait par injection d'un fluide choisi dans les colonnes, soit les fluides existant par mise en circulation en boucle fermée, par injection d'eau (le liquide de rinçage) ou par injection de charge et de régénérant suivie d'injection d'eau.

Dans les figures 3, 4 et 5, l'installation est identique en termes de colonnes, seule diffère le mode opératoire des colonnes, et la présence éventuelle de bacs intermédiaires (non représentés).

L'installation comprend des colonnes (1, 2, 3, 4, 5, 6, 7 et 8) garnies de la même quantité d'une résine échangeuse d'ions, par exemple des résines cationiques fortes de type polystyréniques (par exemple à 4-10 % de divinylbenzène, avantageusement environ 8%), comme les résines DIAONS SKI B de Mitsubishi, DOWEX 600 B de Dow, ou FPC 11-Na de Rohm et Haas (Marques déposées).

Ces colonnes sont disposées en série, chacune comportant une entrée et une sortie. De façon générale, comme il apparaîtra plus bas, chaque entrée peut recevoir la solution aqueuse à traiter, la solution de régénération, de l'eau, de l'eau récupérée, de la lysine acidifiée, de l'ammoniac. De façon générale, comme il apparaîtra plus bas, chaque sortie peut produire la lysine diluée, le raffinat, l'extrait, l'eau récupérée, de l'ammoniac dilué, de la lysine (extrait). Chaque colonne est reliée en outre à la colonne en amont et en aval.

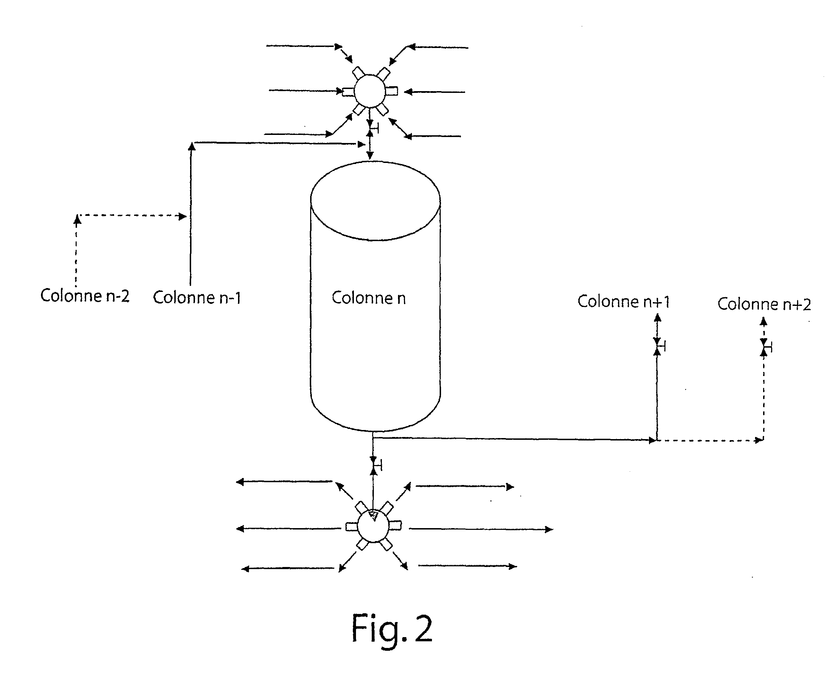

Ce principe est représenté à la figure 2. Comme il est représenté à la figure 2, les vannes peuvent être des vannes multivoies, notamment à 6 voies. Ces vannes multivoies sont connues en elles-mêmes, et sont commandées de façon classique par un moteur électrique. De façon avantageuse, les vannes sont actionnées pour tourner d'un incrément à chaque fois dans un mode d'exploitation. Pour certains modes, on peut actionner les vannes pour les faire tourner de plusieurs secteurs, comme par exemple quand on souhaite isoler une colonne pour procéder à une séquence spécifique sur cette colonne.

En référence au premier mode de réalisation illustré à la figure 3, après la séquenceN, identifié par séquence 1.1 sur la figure, on a la disposition décrite ci-dessus en référence au système SMB.

Puis on procède à un déplacement des fronts lors de la séquence 1.2. Ce déplacement est obtenu par mise en boucle des colonnes et mise en circulation.

Ce déplacement est effectué d'un incrément d'une colonne, par mise en circulation des fluides dans la boucle. Le volume déplacé correspond au volume d'une colonne.

On obtient donc au début de la séquence N+1 les colonnes suivantes. La colonne 4 présente donc en tête des sites partiellement échangés et en terme de fluide ce qui était en tête de la colonne 3 (les sites déjà échangés ne changent pas), donc de la solution de lysine à purifier (donc une composition sensiblement identique à ce que la colonne va recevoir ensuite). La colonne 8 présente alors des sites partiellement régénérés et de la solution de régénérant (donc une composition sensiblement identique à ce que la colonne va recevoir ensuite). Ainsi l'alimentation des colonnes se fait avec un gradient constant, puisque les concentrations ne changent pas en tête de ces colonnes. Ceci est vrai aussi pour les autres colonnes. La colonne 6 présente en tête ce qui était en tête de la colonne 5, à savoir de l'eau, et va recevoir aussi de l'eau. La colonne 2 présente en tête ce qui était en tête de la colonne 1, à savoir de l'eau, et va recevoir aussi de l'eau.

En référence au second mode de réalisation illustré à la figure 3, après la séquence N, identifié par séquence 1.1 sur la figure, on a la disposition décrite ci-dessus en référence au système SMB.

Puis on procède à un déplacement des fronts lors de la séquence 1.2. Ce déplacement est obtenu par mise en circulation de deux zones de déplacement. La première zone de déplacement est la zone comprenant les colonnes 2, 3, 4 et 5. La deuxième zone de déplacement est la zone comprenant les colonnes 6, 7, 8 et 1.

Ce déplacement est effectué d'un incrément d'une colonne, par injection d'eau en tête des zones de déplacement. Le volume déplacé correspond au volume d'une colonne.

On obtient donc au début de la séquence N+1 les colonnes comme dans le premier mode de réalisation. La différence vient du déplacement d'un volume de colonne d'eau. En effet, entre les deux parties du procédé production/régénération, il y a un tampon d'eau pour éviter la contamination des différentes espèces. Ce tampon d'eau est simplement déplacé dans le premier mode de réalisation, tandis qu'il est remplacé dans le second mode de réalisation. Dans le second mode de réalisation, on récupère alors en pied des colonnes 1 et 5 le volume d'eau dans une colonne, donc de l'eau récupérée (Rec W). Cette eau récupérée est envoyée vers un bassin intermédiaire, et peut servir à alimenter les colonnes en eau de rinçage. On peut aussi utiliser cette eau en partie avec de l'eau fraîche pour le rinçage. Les autres séquences sont celles comme dans le premier mode de réalisation.

Dans les premier et second modes de réalisation, le déplacement des fronts est synchrone, puisque tous les fronts se déplacent en même temps d'un incrément de volume. Les fronts entrants se déplacent de façon synchrone avec les fronts sortants.

Dans les premier et second modes de réalisation, la sous-séquence sans injection de la charge correspond à la sous-séquence 1.2 (ou 2.2, selon la séquence considérée).

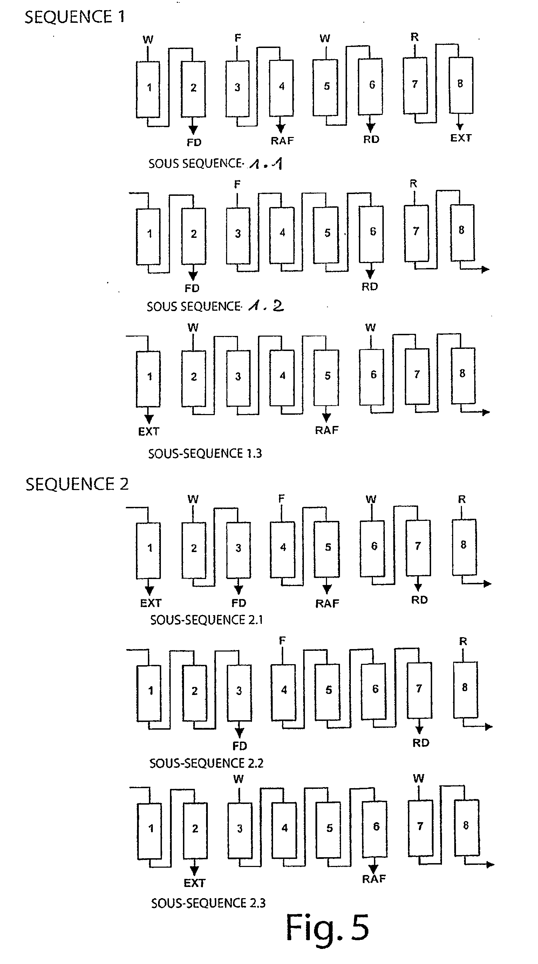

En référence au troisième mode de réalisation illustré à la figure 5, après la séquence N, identifié par séquence 1.1 sur la figure, on a la disposition décrite ci-dessus en référence au système SMB.

Puis on procède à un premier déplacement des fronts lors de la séquence 1.2. Ce premier déplacement est obtenu par mise en circulation de deux zones de premier déplacement. La première zone de premier déplacement est la zone comprenant les colonnes 3, 4, 5 et 6. La deuxième zone de premier déplacement est la zone comprenant les colonnes 7, 8, 1 et 2. On injecte de la solution de lysine dans la colonne 3, ce qui provoque un premier déplacement dans la première zone. La colonne 4 a alors en tête une solution de lysine à purifier. Le contenu de la colonne 6 est récupéré en pied, il s'agit de régénérant dilué. On injecte du régénérant dans la colonne 7, ce qui provoque un premier déplacement dans la deuxième zone. La colonne 8 a alors en tête une solution de régénérant.

Puis on procède à un second déplacement des fronts lors de la séquence 1.3. Ce second déplacement est obtenu par mise en circulation de deux zones de second déplacement. La première zone de second déplacement est la zone comprenant les colonnes 2, 3, 4 et 5. La deuxième zone de second déplacement est la zone comprenant les colonnes 6, 7, 8 et 1. On injecte cette fois de l'eau dans les colonnes 2 et 6. On provoque alors un second déplacement des fronts. La composition de la tête de la colonne 3 se retrouve en tête de la colonne 4; il s'agit à nouveau de solution de lysine à purifier. De ce point de vue, la composition de la tête de colonne 4 n'a pas changé au cours de ce second déplacement. De même, au niveau de la colonne 8 on obtient la composition de la tête de la colonne 7, à savoir du régénérant. De ce point de vue encore, la composition de la tête de colonne 8 n'a pas varié. Ce qui a varié au cours de ce second déplacement ce sont les compositions dans les colonnes 5 et 1, puisqu'on a obtenu du raffinat en pied de la colonne 5 et de l'extrait en pied de la colonne 1. Lors de ce second déplacement, on a reconstitué le "tampon" d'eau entre les deux parties du procédé production/régénération pour éviter la contamination des différentes espèces.

Dans le troisième mode de réalisation, le déplacement des fronts est asynchrone, puisque tous les fronts entrants ne se déplacent pas de façon synchrone avec les fronts sortants. Dans l'exemple, les fronts entrants sont d'abord déplacés puis les fronts sortants sont déplacés, mais il est aussi possible de faire l'inverse.

Dans le troisième mode de réalisation, la sous-séquence sans injection de la charge correspond à la sous-séquence 1.3 (ou 2.3, selon la séquence considérée).

Le nombre de colonnes dans une zone de déplacement ou dans une zone correspondant aux zones (a), (b), (c) et (d) n'est pas nécessairement constant. Une variation du nombre de colonnes dans chaque zone peut être bénéfique pour tirer parti au maximum de chaque colonne. A titre d'exemple, il est possible d'avoir un premier ensemble de colonnes en élution (colonnes de déplacement) dont le nombre est contant, tandis que les zones de production et de régénération ont des longueurs variables, par exemple deux colonnes en production et une colonne en régénération puis une colonne en production et deux colonnes en régénération. A titre d'exemple encore, si on considère un ensemble de M colonnes, on peut avoir une séquence complète (ensemble de toutes les séquences (a), (b), (c), (d) et de déplacement) sur M-1 ou M-2 colonnes ou M-m colonnes. On peut alors isoler une, deux ou m colonnes, par exemple pour maintenance, sur le lit de résine ou sur les ensembles vannes et conduits attachés à cette colonne.

En fait, le procédé selon l'invention permet de mettre en oeuvre une étape choisie sur une colonne choisie, de façon indépendante des autres colonnes, si besoin est. Ceci est impossible avec les procédés continus de l'état de la technique. Par exemple, comme indiqué, on peut isoler une colonne. On peut aussi, à l'intérieure d'une séquence donnée, changer l'alimentation d'une colonne. Lorsqu'une colonne reçoit de l'eau, on peut dans un premier temps utiliser de l'eau récupérée et envoyer sur cette colonne ensuite de l'eau fraîche, ce qui permet d'optimiser la consommation d'eau. On peut aussi alimenter une colonne avec des charges variables ou des solutions de régénération variables. Par rapport aux procédés selon l'état de la technique, on peut mieux jouer sur les débits de rinçage et de production. En particulier, ces procédés de l'état de la technique prévoient de diluer en continu l'alimentation par les eaux de rinçage. Cela conduit entre autre à augmenter la vitesse de passage dans la zone d'adsorption (échange ionique). Les conditions hydrauliques optimums pour chaque étape du séquentiel ne sont donc pas respectées dans les procédés continus de l'état de la technique. L'invention permet de mieux tirer parti des conditions hydrauliques optimum, en gérant au mieux chaque étape, puisque la durée des étapes (a), (b), (c) et (d) n'est pas nécessairement la même. Les écoulements sont donc optimisés dans chaque colonne. Par ailleurs, on peut utiliser des débitmètres sur chaque colonne, puisque le nombre de colonne est réduit par rapport à un manège à 20 ou 30 colonnes comme dans le cas de l'état de la technique de AST. Avoir un débitmètre en tête de chaque colonne permet d'optimiser l'hydraulique dans la colonne en cause.

Dans le cas de la lysine, le procédé peut être optimisé pour obtenir des fluides d'alimentation de colonnes optimisés, en complétant les fluides sortants des colonnes pour réemploi dans les colonnes suivantes. Ainsi, lors de la séquence 1.1 dans les figures, on peut opérer comme suit. La solution qui sort de la colonne 3 qui comprend de la lysine non fixée et des ions ammonium échangés est avantageusement réacidifiée par de l'acide sulfurique pour être en milieu neutre lors de l'alimentation de la colonne 4. On obtient alors dans le raffinat du sulfate d'ammonium. La solution de lysine diluée qui sort de la colonne 2 peut être renvoyée en tête de la colonne 3 et/ou être combinée avec le flux qui sort de cette colonne et l'acide de neutralisation. La solution qui sort de la colonne 6 et qui comprend du régénérant dilué peut être complétée en ammoniac pour être renvoyée en tête de la colonne 7 comme régénérant. On obtient alors un extrait qui est de la lysine et un raffinat qui comprend du sulfate d'ammonium.

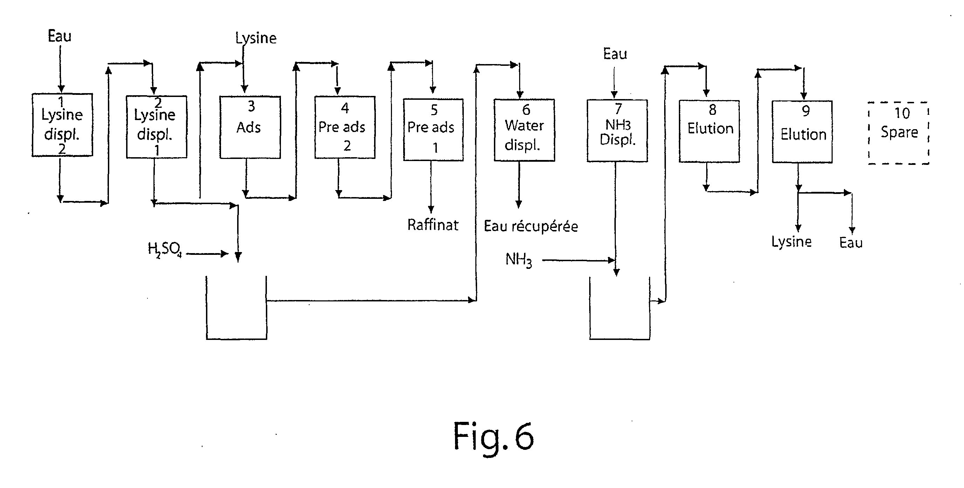

Il est aussi possible d'avoir d'autres colonnes de déplacement, notamment une colonne de déplacement supplémentaire au niveau de l'étape (b), et avoir ainsi une étape supplémentaire de production d'eau récupérée. Ce mode de réalisation est représenté à la figure 6, qui comprend l'utilisation de 9 colonnes. Les colonnes 1 et 2 et 3 correspondent aux colonnes 1 et 2 et 3 dans les figures 3, 4 et 5. Les colonnes 4 et 5 correspondent à la colonne 4 dans les figures 3, 4, 5. La colonne 6 est nouvelle par rapport aux modes de réalisation des figures 3, 4 et 5. La colonne 7 correspond aux colonnes 5 et 6 dans les figures 3, 4, 5. Les colonnes 8 et 9 correspondent aux colonnes 7 et 8 dans les figures 3, 4 et 5. Le mode de fonctionnement est identique à celui pour les modes de réalisation des figures 3, 4 et 5. La mise en circulation s'applique identiquement ici. De même, on peut définir deux zones de déplacement conformément au second mode de réalisation comme suit: la première zone de déplacement comprend les colonnes 2 à 7 et la deuxième zone de déplacement comprend les colonnes 8, 9 et 1. On peut aussi définir des zones de premier et second déplacements conformément au troisième mode de réalisation. Les première et deuxième zones de premier déplacement comprennent les colonnes 3 à 7 d'une part et 8 à 2 d'autre part. Les première et deuxième zones de second déplacement comprennent les colonnes 2 à 7 d'une part et 8, 9 et 1 d'autre part. Dans le mode de réalisation de la figure 6 le flux sortant de la colonne 3 alimente directement la colonne 4, mais il serait aussi possible de le réacidifier pour neutraliser l'effluent. Dans le mode de réalisation de la figure 6 (tout comme pour les autres modes de réalisation), on peut ajuster le pH des différentes fractions qui sont envoyées sur les colonnes. Par exemple, il est possible de s'assurer que le pH de la fraction ayant été en contact avec la colonne la plus chargée (ici 3) soit inférieur à 2 avant d'être renvoyée sur la colonne suivante. En changeant le pH, il est aussi possible de varier le type de lysine préférentiellement fixée sur la résine (lysine monovalente ou non).

L'invention s'applique aussi à tout type de séparation par chromatographie sur tout type de produit. Notamment, le procédé selon l'invention peut utiliser 5 fluides d'entrée (ou plus):
- Fluide de Chargement ou charge (Feed): ce liquide contient la charge a traiter et sa composition tampon pH, salinité permettant, en injectant ce fluide sur une colonne, d'adsorber la molécule d'intérêt sur la phase stationnaire. A l'issue de l'étape de chargement, la colonne contient une phase stationnaire sur laquelle le composant d'intérêt est adsorbé, la phase liquide située dans la colonne est quant à elle constituée du fluide de chargement dilué (FD, Feed Diluted).
- Fluide de rinçage, d'une salinité et pH identique au fluide de chargement, mais ne contenant pas de charge à traiter. Cette étape renouvelle la phase liquide de la colonne et permet d'éliminer les composés de la charge qui ne sont pas retenus par la phase stationnaire. Dans le cas de la lysine, on utilise par exemple de l'eau ou un acide aqueux.
- Elution de l'espèce désirée : un fluide d'une nature modifiant la nature des interactions entre la molécule cible et la phase stationnaire permet de faire désorber la molécule cible de la phase stationnaire, la molécule cible est alors collectée dans le liquide sortant.
- Régénération: après l'élution, des impuretés peuvent rester fortement adsorbées sur la phase stationnaire, pouvant en pénaliser la stabilité ou le caractère sanitaire. Un fluide contenant des additifs tels de la soude ou de l'urée peut ainsi être utilisé. Dans le cas de la lysine, décrit précédemment, les étapes d'élution de l'espèce désirée et de régénération sont mises en oeuvre simultanément, le régénérant (ammoniaque) échangeant les sites de la résine pour libérer la lysine
- L'injection d'un solvant correspondant au fluide de rinçage utilisé après le chargement permet de vider la colonne du ou des solvants de régénération avant d'effectuer le prochain chargement. On garde ainsi un tampon entre le chargement et la fin de la régénération; on parle d'équilibrage.
L'invention offre un procédé qui permet de mettre en oeuvre les 5 étapes :
- Etape a : dite d'équilibration au cours de laquelle la solution d'équilibration est injectée sur une au moins une colonne du système pour la vider du solvant de régénération qu'elle contient. En aval de la zone d'équilibration, le fluide soutiré va dans un premier temps être composé majoritairement de la solution de régénération puis majoritairement de la solution d'équilibrage.
- Etape b : dite de chargement au cours de laquelle la solution de charge à traiter est injectée. La molécule d'intérêt est alors fixée sur le support chromatographique avec d'autres impuretés. En sortie de cette zone, en aval du point d'injection, le fluide soutiré contient alors les impuretés les moins retenues.
- Etape c : dite de lavage au cours de laquelle s'effectue un lavage de la colonne où l'on remplace la phase liquide contenant notamment des impuretés non retenues par le solvant de lavage.
- Etape d : dite d'élution au cours de laquelle on injecte une solution modifiant les interactions de la molécule d'intérêt avec le support chromatographique permettant ainsi d'éluer la molécule d'intérêt. En sortie de la zone d'élution, le fluide soutiré va d'abord contenir la solution de lavage, puis une solution riche en produit d'intérêt.
- Etape e : dite de régénération au cours de laquelle on injecte une solution de régénération permettant de décrocher les impuretés très fortement adsorbées sur le support.

Dans l'invention, le déplacement périodique des points d'injection peut s'effectuer d'une colonne en une colonne; ainsi on peut gérer chaque colonne (ou zone) de façon indépendante. Cette variante se distingue particulièrement des systèmes à carrousel du type AST, puisque dans ces systèmes toutes les colonnes sont commutées nécessairement ensemble. L'invention permet d'opérer chaque colonne (ou zone) de façon indépendante; notamment le déplacement des points d'injection/soutirage peut être synchrone, asynchrone, de même que l'étape de déplacement des fronts peut être synchrone ou asynchrone, et peut être mise en oeuvre colonne par colonne (ou zone par zone). On peut aussi opérer avec une colonne (ou zone) pour une opération ou avec plusieurs colonnes (ou zones) pour d'autres opérations; ainsi on peut déplacer les points d'injection/soutirage et les fronts d'une colonne pour une zone donnée et de deux ou plusieurs colonnes pour une autre zone donnée.

L'invention s'applique aussi dans le cas d'un procédé utilisant 5 fluides ou plus, comme indiqué supra, et est applicable au biomolécules ou autres molécules à haute valeur ajoutée, comme les médicaments. Dans le cas des biomolécules, en général on ne s'intéresse pas aux fluides sortants qui contiennent pas la molécule d'intérêt car le coût de la biomolécule permet de s'affranchir d'étapes optimisées. Dans le cas d'un biomolécule par contre, il est primordial de récupérer le maximum de cette biomolécule. Ce principe est notamment illustré dans la description qui suit.

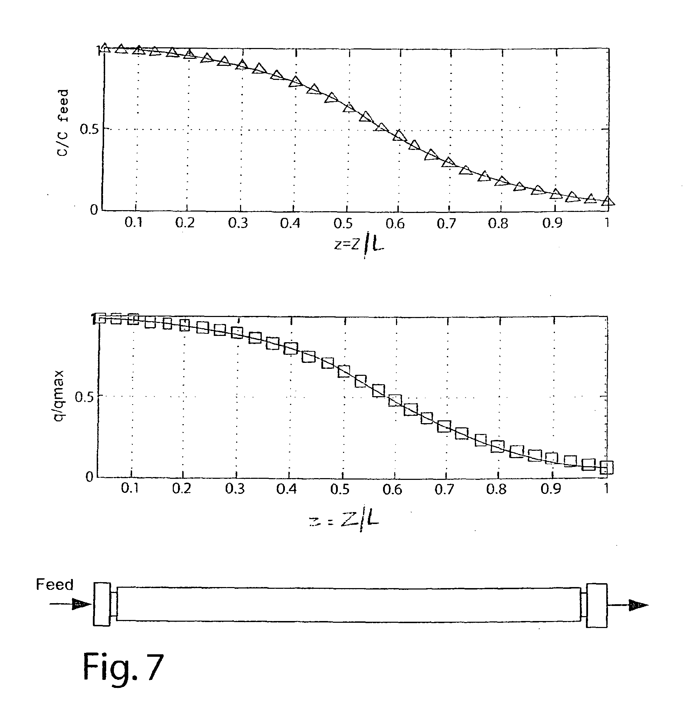

Dans les procédés chromatographiques d'adsorption, la vitesse à laquelle la molécule d'intérêt se fixe sur la phase stationnaire est lente. Tant et si bien que lorsque l'on alimente en continue une colonne de volume V, le produit sort de la colonne alors que la phase stationnaire n'est pas totalement saturée par la molécule cible. La figure 7 illustre cette adsorption limitée.

Sur la Figure 7, les graphiques supérieur et inférieur montrent respectivement la concentration de la molécule d'intérêt dans la phase liquide et dans la phase solide. Le fluide de chargement est injecté à gauche de la colonne est il apparaît que le fluide sortant de la colonne contient une concentration non nulle de molécule cible. Continuer ainsi le chargement induirait une perte du produit cible ce qui est économiquement inacceptable. Le chargement se termine donc de fait alors que le produit a quitté la colonne avant que l'adsorption complète n'ait été effectuée. Les étapes de rinçage, élution, régénération et équilibrage commencent alors pour désorber une molécule cible adsorbée sur tout ou partie de la résine ou support chromatographique. On notera que ces étapes consomment une quantité de fluides qui dépend principalement du volume de la colonne et pas de la quantité de produit cible à désorber; on a donc un intérêt à avoir une colonne la plus chargée possible du point de vue consommation des différents fluides.

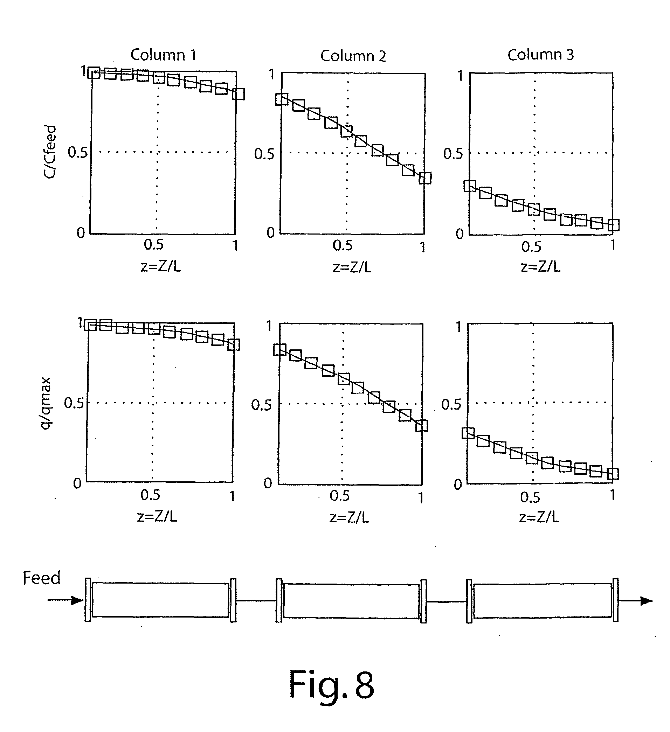

Si on considère maintenant le cas de la figure 7, mais en supposant que l'injection a été effectuée sur trois colonnes de volumes V/3, l'on obtient alors la figure 8.

La figure 8 montre que dans les conditions d'adsorption partielles identiques à la figure 7, la colonne la plus à gauche voit sa phase stationnaire complètement saturée. Dans l'invention, la charge n'est plus appliquée sur la première colonne, mais seulement au niveau de la colonne 2 partiellement saturée. Les étapes ultérieures de rinçage, élution, régénération et équilibrage sont par la suite appliquées à la colonne 1, qui est sortie de la zone de chargement. A la différence du cas présenté sur la figure 7, dans lequel ou la colonne rincée, éluée etc... est partiellement chargée en molécule cible, le cas présenté sur la figure 8 montre que la colonne 1 est chargée presque totalement. Les différents solvants de rinçage, élution, régénération et équilibrage permettent donc de désorber plus de produit dans le cas de la figure 8 que dans le cas de la figure 7. La consommation d'éluant par quantité de molécule cible produite est ainsi réduite significativement.

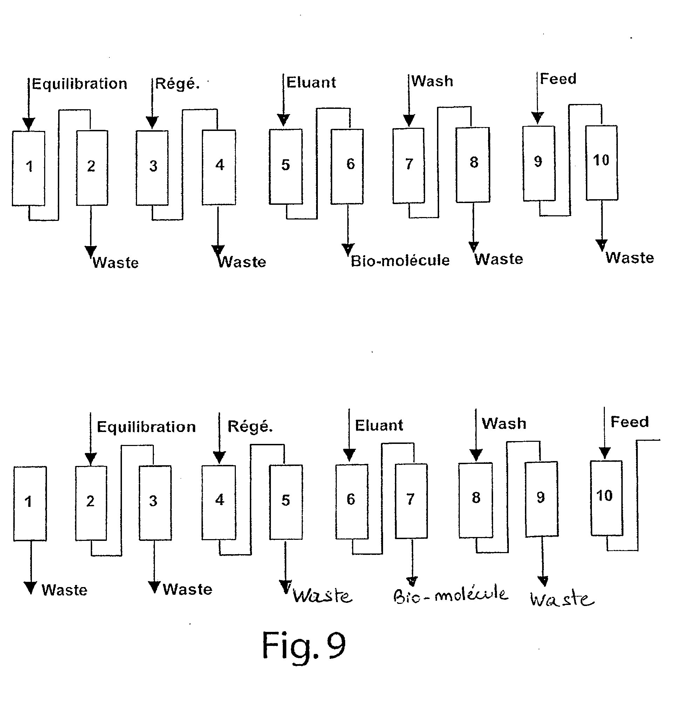

En application de ce principe, un système multicolonnes synchrone, périodique et non séquencé de type AST peut être utilisé comme il est démontré à la figure 9. La figure 9 montre que le procédé met en jeu différentes arrivées de fluides. Entre chacune de ces arrivées, on peut définir une zone: par exemple entre l'arrivée de charge (Feed) et l'arrivée du fluide d'équilibrage on définit la zone de chargement. Entre la solution de rinçage (Wash) et la charge (Feed), on défini la zone de rinçage, etc.. Ces zones correspondent aux zones première, deuxième, troisième, quatrième et cinquième du procédé selon l'invention (dans le cas de l'acide aminé et de résine échangeuse d'ions, les zones quatrième et cinquième sont confondues et l'éluant et le régénérant sont un même fluide). Le déplacement périodique est aussi illustré à la figure 9. On retrouve ici le principe illustré à la figure 1 (qui correspondait au cas avec quatre fluides).

Si on considère la colonne No. 9, en fin de période, elle en en configuration de chargement. Après la commutation, elle se situe juste avant la sortie de l'étape de lavage. Par conséquent, ce qui sort de cette colonne juste après la commutation des lignes contient encore de la charge, contenant donc la molécule d'intérêt, non purifiée, qui se trouve de fait diluée et perdue.

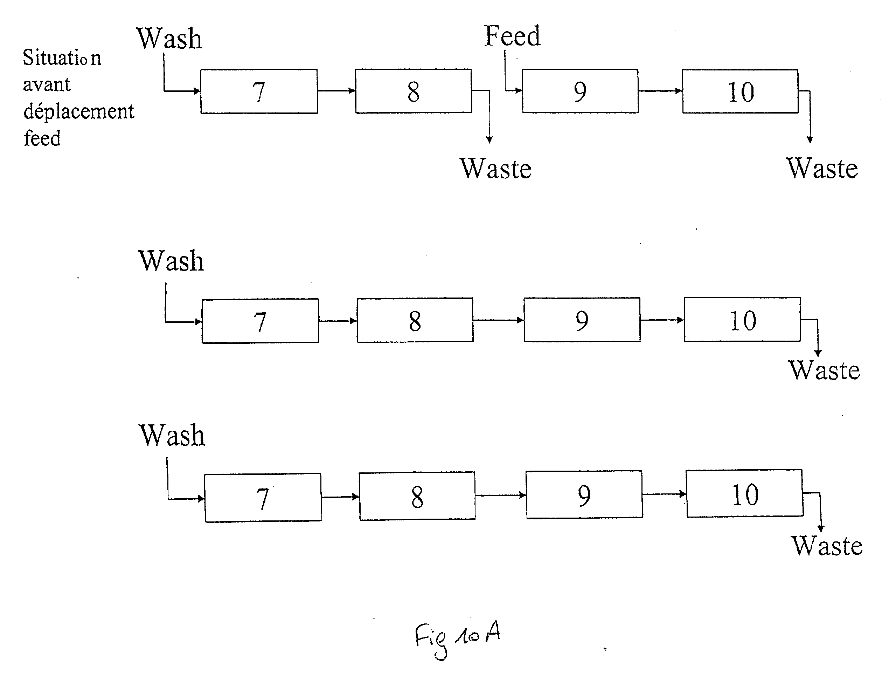

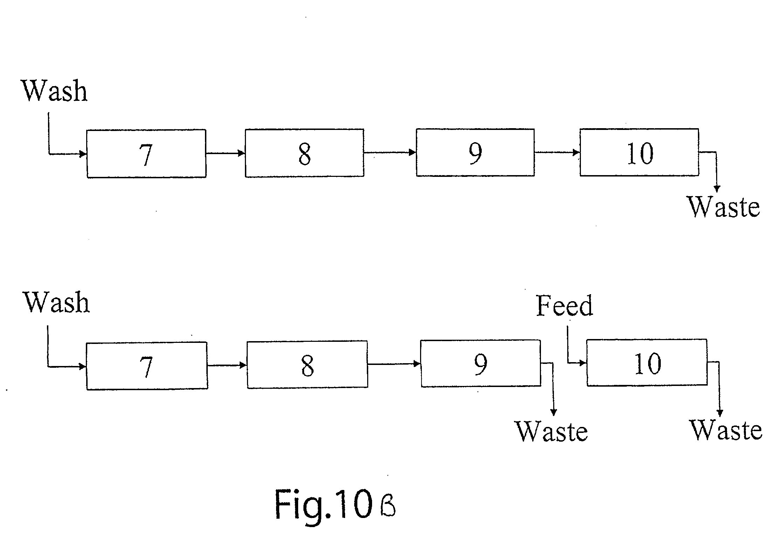

Selon l'invention, pour éviter de perdre cette partie de la charge et de la diluer, on applique un déplacement des fronts, comme cela est pratiqué pour le cas de l'acide aminé décrit ci-dessus. La séquence est alors celle décrite figure 10. On part de la position en (1). Au lieu de commuter directement la ligne de charge (Feed) et le la ligne d'effluent (Waste) qui la précède, on laisse une étape de transition pour la colonne n°9. Dans cet exemple les autres lignes sont immobiles. On passe alors à la position (2), qui comprend la liaison fluide des deux zones, les colonnes 8 et 9 étant en liaison fluide, les autres colonnes n'étant pas modifiées. La solution de rinçage (identifié Wash) en blanc pousse la charge (donc le produit d'intérêt) vers la colonne 10, ce qui est identifié par la position (3). La colonne 9 peut alors être qualifiée "en transition de zone". En fait de transition ou en fin de déplacement des fronts, on arrive à la position (4). Le liquide contenu dans la colonne 9 ne contient presque plus de produit d'intérêt, la ligne de charge (Feed) et la ligne d'effluent (Waste) qui la précède peuvent donc réapparaître; ceci est identifié à la position (5). On peut alors procéder à la commutation des autres lignes.

Dans ce cas, cette étape, ou sous séquence de déplacement des fronts permet d'éviter de perdre le contenu liquide de la colonne 9 qui en l'occurrence contient le produit d'intérêt. Sur un procédé d'affinité, il est classique de considérer que 5 à 20 volumes de colonne sont en général nécessaires pour saturer une colonne. La porosité du lit chromatographique étant approximativement égal à 0.8, la quantité de liquide contenu dans une colonne est donc 80% du volume de la colonne. Eviter la perte d'une quantité de charge correspondant à 0.8 volume de colonne sur 5 à 20 volumes introduits permet donc de significativement améliorer le rendement.

Cette étape de transition appliquée cette fois au déplacement de la ligne de solvant de régénération permet d'économiser 0.8 volume de colonnes sur 3 à 5 volumes de colonnes injectés dans la plupart des cas. Elle peut donc réduire également la consommation de certains solvants de régénération.

Dans la présente invention, la ligne de charge mais aussi chaque ligne d'arrivée de fluide peut en fait se déplacer librement par rapport aux autres avec la possibilité de présenter une sous séquence de déplacement des fronts. En fait, chaque déplacement des fronts peut se faire ligne par ligne, de façon synchrone ou asynchrone, et ce encore ligne par ligne. Toutes les combinaisons sont envisageables, étant entendu que le déplacement des fronts comprend au moins le déplacement du front de la charge, de préférence aussi le déplacement du front de régénérant. Ce déplacement des fronts, au moins au niveau d'une colonne qui est en phase de chargement, est impossible avec les systèmes selon l'état de la technique.

Il est aussi possible de procéder à un déplacement des fronts selon un incrément d'une colonne, mais aussi d'un incrément inférieur ou supérieur à une colonne.

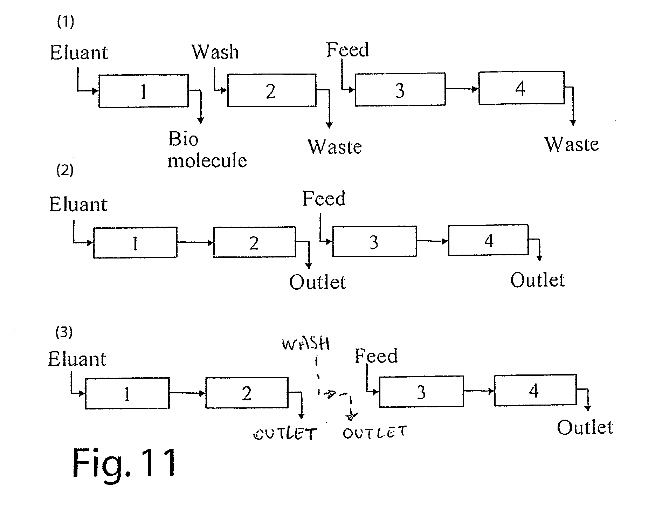

Un mode de réalisation particulier implique la suppression d'une ligne d'arrivée et d'une ligne d'effluent. Ce cas est représenté à la figure 11. Dans cette figure, on considère comme point de départ la position (1), avec des lignes d'éluant, de rinçage (Wash) et de charge (Feed), les lignes d'extrait et d'effluent étant notées "biomolécule" et "Waste", sans qu'il n'y ait de limitation à la production d'une biomolécule car le procédé est applicable à tout type de produit. Dans le cas de la figure 10, le déplacement périodique est asynchrone. Considérons le cas où la ligne d'alimentation en solution de rinçage (Wash) se déplace à 30% de la durée de la période; dans ce cas la colonne en transition pendante le rinçage est définie comme inexistante. Charge (Feed) et Eluant se déplacent en fin de période. À 30% de la période, ordre est donné à la ligne de solution de rinçage de se déplacer. La ligne de rinçage passe donc de l'entrée de colonne 2 à l'entrée de colonne 3, se superposant à la ligne de charge. Dans le cas spécifique considéré, une superposition de lignes d'entrée n'est pas souhaitée, et il est défini que dans un tel cas, c'est la ligne en aval qui prime. On arrive à la position (2). Symboliquement, on peut considérer une situation schématiquement représentée à la position (3).

De même, si trois lignes se superposent, c'est la ligne aval qui prime.

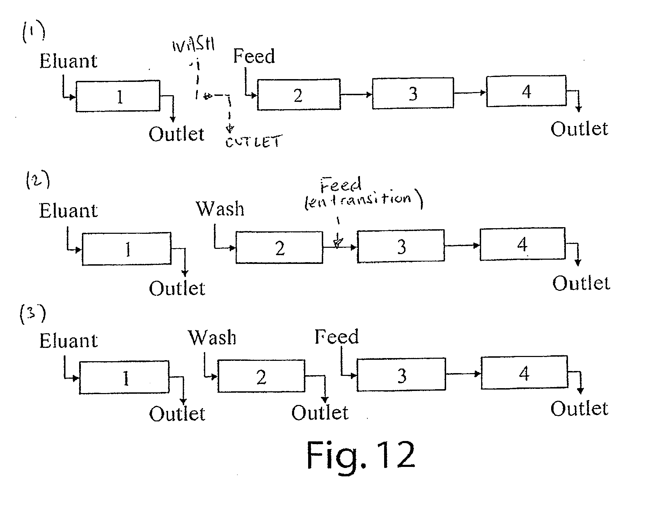

Le cas de la figure 12 est un autre cas particulier de déplacement périodique asynchrone. Dans la position (1), on suppose qu'en début de période, la ligne de solution de rinçage est superposée à la ligne de charge. En application du principe sur la superposition des lignes, c'est la ligne de charge qui prime. Si la ligne de charge est déplacée de façon asynchrone, avant la ligne de solution de rinçage, avec un temps de transition (pour le déplacement des fronts), alors on se trouve dans la position (2). Une fois la transition ou déplacement des fronts effectués, on se retrouve alors dans la position (3) et le déplacement de la ligne de charge est effectif.

L'utilisation d'un mode asynchrone permet de réduire le nombre de colonnes totales en faisant coexister dans une même colonne plusieurs zones pendant une période donnée.

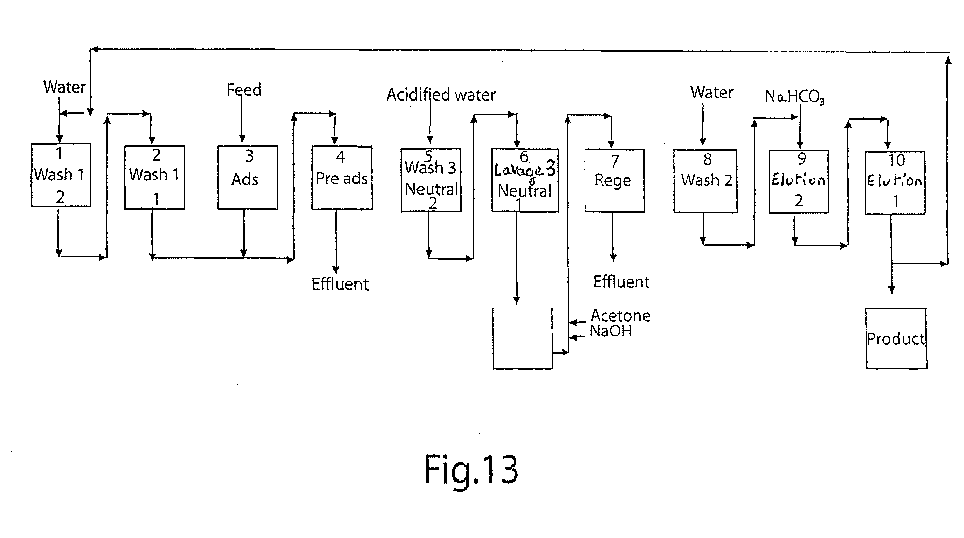

La figure 13 est un exemple d'un procédé selon l'invention avec plusieurs lignes de fluides, ici au nombre de 6. Dans le cas représenté à la figure 13, on représente la séparation d'un antibiotique. Dans le mode de réalisation, on alimente les colonnes 1 et 2 avec de l'eau comme solution de rinçage, et on obtient en sortie une solution de produit d'intérêt diluée. La charge alimente la colonne 3 d'adsorption tandis que la colonne de préadsorption en aval est alimentée par la sortie de la colonne 3 (qui peut être combinée avec la sortie des colonnes de lavage 1, solution de charge diluée) et un effluent est obtenu en sortie de la colonne de préadsorption (raffinat). De l'eau acidifiée est utilisée comme solution d'équilibrage dans les colonnes 5 et 6, pour effectuer un rinçage neutre (les colonnes provenant d'une régénération basique). L'effluent sortant des colonnes rincées 5 set 6 est combiné avec des composants de régénération, comme acétone et soude. La colonne 7 est alors régénérée, et on obtient un effluent en sortie de colonne. La colonne 8 est soumise à un lavage avec de l'eau (cette étape peut être omise), et l'effluent est additionné de carbonate de soude. Cette solution est une solution éluante qui est envoyée sur les colonnes 9 et 10, dont l'effluent est l'extrait. Cet extrait fournit le produit d'intérêt et l'eau séparée peut être recyclée dans le procédé (représenté ici en retour vers le lavage des colonnes 1 et 2).

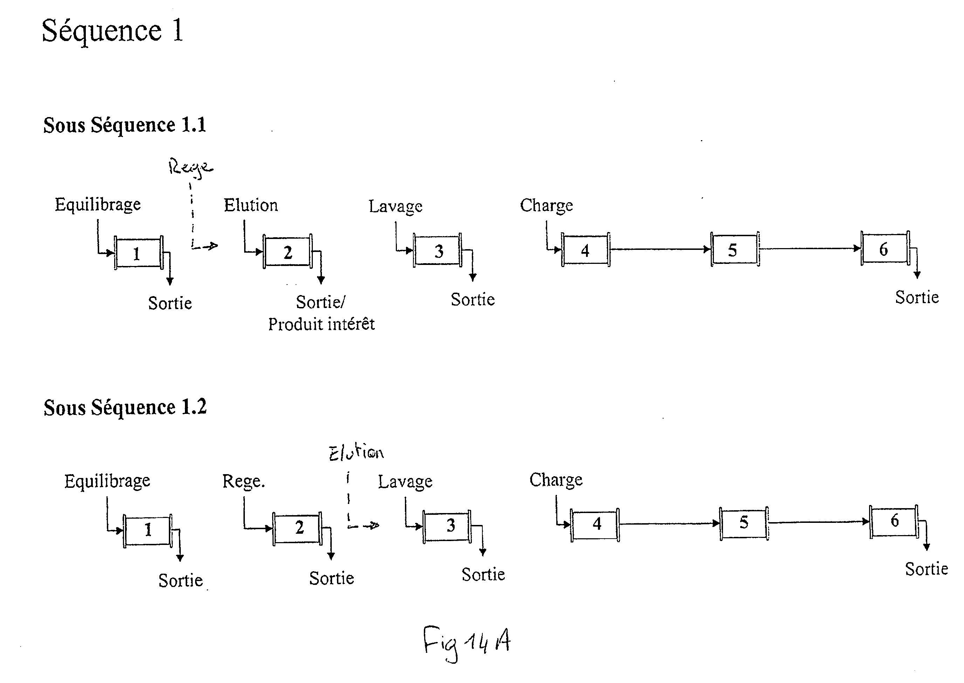

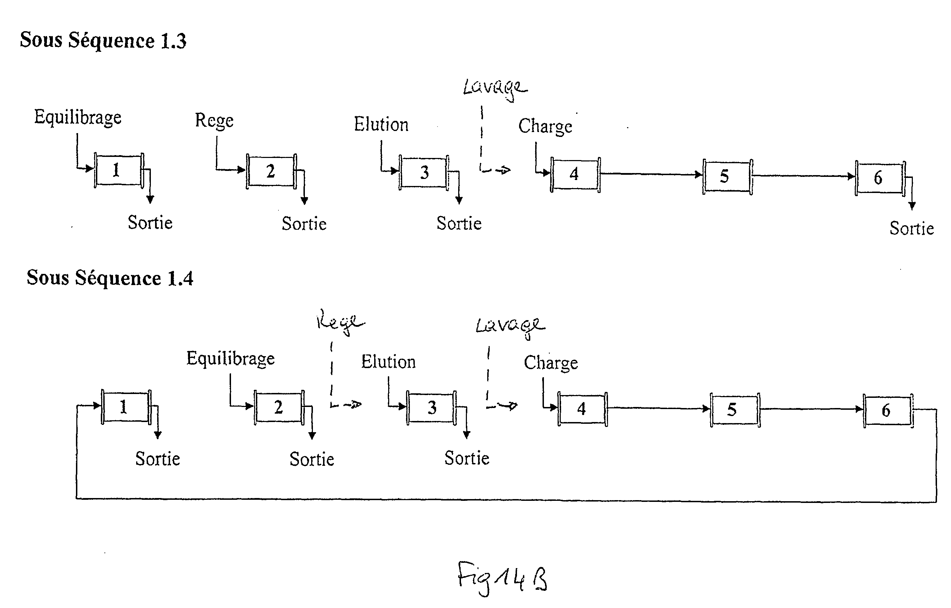

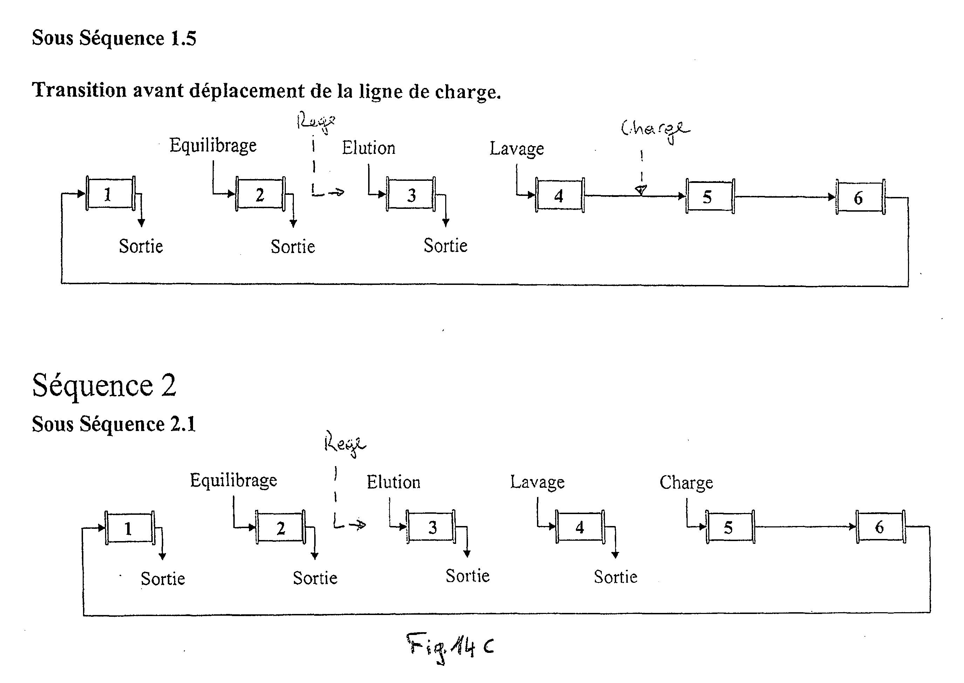

Tandis que le procédé décrit à la figure 9 montrait la mise en oeuvre de ces étapes selon un procédé périodique, non séquencé dans lequel on effectue un déplacement des lignes d'injections des différentes solutions de façon synchrone non séquencée, la figure 14 montre un procédé dans lequel les déplacements sont asynchrone et séquencés. La figure 14 montre donc un exemple de mise en oeuvre des étapes (a) à (e) selon l'invention sur un système à 6 colonnes dont la période est décomposée en 5 sous-séquences correspondant aux déplacements de certaines lignes d'injection à différents moments de la Séquence.

En début de première séquence la situation est la suivante :
- la ligne d'injection de la solution d'équilibrage est en colonne 1
- les lignes d'injection de la solution de régénération et d'élution sont en colonne 2. Comme expliqué précédemment, en cas de superposition de lignes, c'est la ligne aval qui prévaut, dans ce cas la ligne d'injection de solution d'élution.
- la ligne d'injection de la solution de lavage est en colonne 3
- la ligne d'injection de la solution de charge à traiter est en colonne 4.

Cette configuration correspond à la sous séquence 1.1 qui dure de t = 0 à par exemple t = 0.24*Δt.

A la fin de la sous séquence 1.1, on déplace d'une colonne par exemple la ligne d'élution. La sous séquence 1.2 commence, la configuration est la suivante:
- la ligne d'injection de la solution d'équilibrage est en colonne 1
- la ligne d'injection de la solution de régénération est en colonne 2.
- la ligne d'injection de la solution d'élution est superposée à l'injection de solution de lavage en colonne 3. La ligne aval primant, c'est la solution de lavage qui est injectée en colonne 3.
- La ligne d'injection de la solution de charge à traiter est en colonne 4.

La sous séquence 1.2 dure par exemple de t = 0.24*Δt à t = 0.36*Δt.

A la fin de la sous séquence 1.2, on déplace par exemple la ligne de lavage. La sous séquence 3 commence, la configuration est la suivante.
- la ligne d'injection de la solution d'équilibrage est en colonne 1
- la ligne d'injection de la solution de régénération est en colonne 2.
- la ligne d'injection de la solution d'élution est en colonne 3.
- la ligne d'injection de la solution de lavage est superposée à la ligne d'injection de la solution de charge à traiter en colonne 4. La charge étant en aval du lavage, c'est l'injection de charge qui prévaut. C'est donc la solution de charge à traiter qui est injectée en colonne 4.

La sous séquence 1.3 dure par exemple de t = 0.36*Δt à t = 0.60*Δt.

A la fin de la sous séquence 1.3, on déplace simultanément les lignes d'équilibrage et de régénération. La sous séquence 1.4 commence, la configuration est la suivante.
- la ligne d'injection de la solution d'équilibrage est en colonne 2
- la ligne d'injection de la solution de régénération et superposée à la ligne d'injection de la solution d'élution en colonne 3. La ligne aval qui prévaut dans ce cas est l'injection de la solution d'élution.
- la ligne d'injection de la solution de lavage est superposée à la ligne d'injection de la solution de charge à traiter en colonne 4. La charge étant en aval du lavage, c'est l'injection de charge qui prévaut. C'est donc la solution de charge à traiter qui est injectée en colonne 4.

La sous séquence 1.4 dure par exemple de t = 0.60*Δt à t = 0.76*Δt.

A la fin de la sous séquence 1.4, on effectue une transition correspondant au déplacement du produit d'intérêt contenu dans la phase liquide de la colonne 4 vers la colonne 5. Pour se faire, on arrête d'injecter la solution de charge à traiter, il y donc une transition de l'étape (b) de chargement correspondant au déplacement des fronts de concentrations de la phase liquide des impuretés non retenu et du produit d'intérêt par l'étape (c). La transition est donc un arrêt de l'injection de la charge à traiter correspondant au déplacement des fronts induit par l'étape (c).

La sous séquence 1.5 commence, la configuration est la suivante.
- la ligne d'injection de la solution d'équilibrage est en colonne 2
- la ligne d'injection de la solution de régénération et superposée à la ligne d'injection de la solution d'élution en colonne 3. La ligne aval qui prévaut dans ce cas est l'injection de la solution d'élution.
- la ligne d'injection de la solution de lavage est en colonne 4.

La sous séquence 1.5 dure par exemple de t = 0.76*Δt à t = Δt.

A la fin de la sous séquence 1.5 la première période est terminée, la solution de charge à traiter est injectée en colonne 1.5

La sous séquence 2.1 de la séquence 2 peut donc commencer, on remarque que la sous séquence 2.1 de la séquence 2 est similaire à la sous séquence 1.1 de la séquence 1 à ceci près que les lignes sont décalées d'une colonne.

Il apparaît donc que le déplacement asynchrone des lignes permet d'effectuer en séquence 1 sur la colonne 2, les étapes d'élution, régénération et équilibrage, de fait, ceci permet de réduire le nombre des colonnes par rapport à un procédé utilisant un déplacement de type synchrone.

Il apparaît également que grâce à l'invention, la séquence de transition correspondant à l'arrêt de l'injection de la solution de la charge à traiter (étape (b)) permet de ne pas perdre le produit d'intérêt encore contenu dans la colonne 4 à la fin de la séquence 1.4.

On peut aussi utiliser plusieurs lignes d'éluants, par exemple pour traiter des solutions contenant plusieurs produits d'intérêt, qui sont désorbés ou échangés dans des conditions différentes. Un premier éluant permettra de récupérer sélectivement le premier produit d'intérêt tandis qu'un second éluant permettre de récupérer sélectivement le second produit d'intérêt. Un exemple d'application comprend la récupération de protéines du lait.

Dans la description de la présente invention, le terme "colonne" doit être compris comme signifiant une colonne physique ou tout autre partie d'une colonne identifiable comme une cellule, lorsque la colonne physique comprend des points d'injection et de soutirage à plusieurs niveaux. Une seule colonne physique peut ainsi être divisée en plusieurs sections ou cellules, et l'invention pourra s'appliquer à cette configuration.

L'invention s'applique donc à tous les produits d'intérêt susceptibles d'être séparés par chromatographie. Par exemple l'invention permet la séparation d'acide aminé comme la lysine, la phase stationnaire étant une résine échangeuse d'ions et les solutions de rinçage étant de l'eau. Dans le cas de biomolécules, on peut utiliser pour la séparation d'immunoglobuline (par ex IG de bovin, lapin ou humaine) à partir de sérum (de bovin, de lapin, ou humain) des phases stationnaires basées sur le principe d'affinité par exemple un gel de sépharose greffé Protein A, et des éluants choisis parmi solution de PBS (Phosphate -Buffered - Saline), solution de glycine-HCl, solution d'HCl, etc..

### EXEMPLES

Les exemples suivants illustrent l'invention sans la limiter.

### Exemple 1. Acide aminé/Lysine.

Le procédé selon l'invention s'applique particulièrement à un acide aminé, tel que la lysine; l'invention fournit donc un procédé pour séparer un acide aminé à partir d'une solution aqueuse contenant un tel acide aminé et des impuretés, par passage de cette solution sur un lit fixe de résine échangeuse d'ions et comprenant au moins quatre zones en série, des moyens d'écoulement de liquide étant disposés entre des zones adjacentes et entre la dernière et la première zones, ledit acide aminé étant sélectivement échangé par contact avec ladite résine échangeuse d'ions et au moins l'une des impuretés étant relativement moins échangée sur cette résine échangeuse d'ions que l'acide aminé, résine échangeuse d'ions dont le pouvoir d'échange est régénéré par l'action d'un régénérant, caractérisé en ce qu'il comprend plusieurs séquences, chaque séquence comprenant les étapes suivantes :
(a) introduire un certain volume d'eau à l'entrée de la première zone et soutirer sensiblement simultanément le même volume d'un liquide dilué en ledit acide aminé, au niveau d'un point situé en aval de cette zone;
(b) introduire un certain volume de ladite solution aqueuse à l'entrée de la deuxième zone et soutirer sensiblement simultanément le même volume d'un liquide riche en la ou les impuretés relativement moins échangée, au niveau d'un point situé en aval de cette zone;
(c) introduire un certain volume d'eau à l'entrée de la troisième zone et soutirer sensiblement simultanément le même volume d'un liquide dilué en régénérant, au niveau d'un point situé en aval de cette zone;
(d) introduire un certain volume de régénérant à l'entrée de la quatrième zone et soutirer sensiblement simultanément le même volume d'un liquide riche en l'acide aminé, au niveau d'un point situé en aval de cette zone;
   les étapes (a), (b), (c) et (d) pouvant être mises en oeuvre de façon simultanée ou non;
   chaque séquence suivante étant effectuée par le déplacement périodique vers l'aval, sensiblement d'un même incrément de volume, des points d'introduction et de soutirage,
   et comprenant en outre une étape
(e) déplacement des fronts dans les zones avant le déplacement périodique.

Dans le cas de la lysine, les fluides sont des bouillons de culture, des solutions acides et comme régénérant une solution d'ammoniac. Si on compare le procédé selon l'invention à un procédé de l'état de la technique continu, par exemple le procédé AST, pour une production donnée de lysine, le procédé permet des gains significatifs. Pour une production identique les consommables sont réduits de 10%, la consommation d'eau est légèrement inférieure, la production d'effluent est sensiblement identique, et le nombre de colonnes est divisé par trois.

### Exemple 2. Biomolécule/IgG.

Pour la mise en oeuvre de la séparation d'une biomolécule, on met en oeuvre le procédé par exemple selon le mode opératoire de la figure 14. A titre de biomolécule, on peut citer l'IgG, Dans un tel cas, les compositions des solutions utilisées sont les suivantes:

| | |
|---|---|
| Equilibration | PBS (Phosphate Buffered Solution) pH : 7,4 |
| Rénégération | HCl pH: 2 |
| Eluant | Glycine HCl pH: 3 |
| Wash | PBS (Phosphate Buffered Solution) pH : 7,4 |
| Feed | Solution aqueuse d'immunoglobuline G IgG |

L'adsorption d'IgG humaine utilisant un ligand type protéine A a été décrite par Jungnauer (Journal of chromatography B 790 (2003) 35-51). Les courbes de perçage d'IgG sur ces types de phases stationnaires montrent des limitations cinétiques similaires à ce qui est présenté figure 7. Dans un tel cas, les résultats obtenus ont montré que l'utilisation de plusieurs colonnes dans l'étape d'adsorption permet selon le procédé de l'invention de mieux utiliser la phase stationnaire comme présenté figures 7 et 8 et d'obtenir ainsi une réduction de la consommation d'éluant.

Le procédé décrit s'applique tout particulièrement aux immunoglobulines G humaines (h-IgG) ou anticorps. L'invention fournit donc un procédé pour séparer ces biomolécules à partir d'une solution contenant les dites molécules ainsi que des impuretés, par passage de cette solution sur un lit de phase stationnaire spécifique à la chromatographie d'affinité (protéine A greffée sur une matrice). Le procédé de chromatographie d'affinité développé met en oeuvre les 5 étapes de chromatographie définies par l'utilisation d'un fluide spécifique en entrée.

Le fluide de chargement (IgG et impuretés dans du tampon PBS pH 7.4, Phosphate Buffer Saline) contient la charge à traiter et sa composition (tampon pH, salinité) permet, en chargeant ce fluide sur la colonne, à la molécule d'intérêt de se fixer sur la phase stationnaire tandis que la plupart des impuretés passent à travers, sans être retenues. A l'issue de l'étape de chargement, la colonne contient une phase stationnaire sur laquelle le composant d'intérêt est adsorbé.

Le fluide de rinçage (tampon PBS pH 7.4), d'une salinité et d'un pH identiques au fluide de chargement, ne contient pas de charge à traiter. Cette étape renouvelle la phase liquide de la colonne afin qu'il n'y ait plus d'impuretés qui puissent être éluées en même temps que les IgG. Cette étape permet également de ne pas perdre le produit d'intérêt contenu dans la phase liquide de la colonne.

Le fluide d'élution des IgG (Glycine HCl 0.1 M, pH 2.5) : fluide qui va modifier la nature des interactions entre les IgG et la phase stationnaire, il permet désorber la molécule cible de la phase stationnaire, la molécule cible est alors collectée dans le liquide sortant.

Le fluide de régénération (Glycine HCl 0.1M, pH 2) : après l'élution, des impuretés peuvent rester fortement absorbées sur la phase stationnaire, pouvant en pénaliser la stabilité ou le caractère sanitaire.

Le fluide d'équilibration (tampon PBS pH 7.4) : généralement identique au fluide de rinçage utilisé après le chargement, ce fluide permet d'éliminer de la colonne le fluide de régénération avant d'effectuer le prochain chargement.

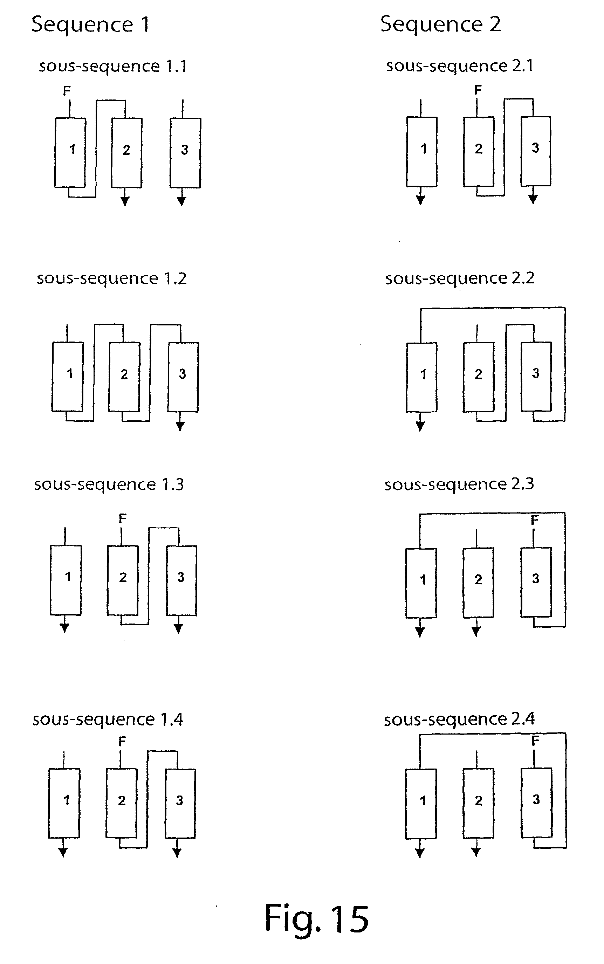

L'essai présenté selon le procédé de séparation multi-colonnes séquencé utilise dans cet exemple 3 colonnes. Les 5 étapes utiles à la purification des IgG sont réparties dans les différentes séquences et sous séquences selon le diagramme représenté à la Figure 15.

Le système constitué de 3 colonnes implique qu'un cycle est divisé en 3 séquences. Chacune des 3 séquences est divisée en 4 sous- séquences :

### Séquence 1:

Sous Séquence 1.1 : Les 2 premières colonnes 1 et 2, en série, définissent une zone de chargement. La colonne 3 se situe en zone d'équilibration
Sous Séquence 1.2 : Dès que la colonne 1 est pratiquement totalement chargée en IgG, elle passe en zone de lavage. La colonne 3 entre alors en zone de chargement, les 3 colonnes sont ainsi mises en série lors de cette sous-séquence.
Sous Séquence 1.3 : La colonne 1, une fois saturée en IgG et lavée de ces impuretés, peut entrer en zone d'élution. Le chargement se poursuit sur les colonnes 2 et 3 en série.
Sous Séquence 1.4 : La colonne 1, éluée et ensuite régénéré. Le chargement se poursuit toujours sur les colonnes 2 et 3 en série.

Pour cet exemple à 3 colonnes, il est fait appel à 3 séquences pour la réalisation d'un cycle complet. La séquence 2 se déduit de la séquence 1 par un décalage d'une colonne des lignes de fluides entrant et sortant comme décrit sur la figure 15. De même, la séquence 3 (non représentée) se déduit d'une manière identique de la séquence 2. Chacun des cycles suivants redémarre à la séquence 1 et assure ainsi la continuité du procédé.

Le séquentiel présenté sur la Figure 15 comporte 5 zones, chacune de ces zones étant définies par les entrées des différents fluides. Par exemple, dans la sous séquence 1.1, entre l'arrivée de la charge sur la colonne 1 et l'arrivée du fluide d'équilibration sur la colonne 3, se trouve la zone de chargement.

Dans la sous-séquence 1.2 où les 3 colonnes sont en série, il y a interruption de la charge et déplacement du front de chargement sur les colonnes 2 et 3.

Sur le système décrit précédemment, 2 essais ont été menés à 2 vitesses de chargement différentes : 450 cm/h et 620 cm/h. La solution de chargement contient des Immunoglobulines G polyclonales humaines à 1 g/l ainsi que des impuretés caractéristiques d'une charge issus d'un procédé de fermentation. Les paramètres process utilisés pour la purification de ces IgG sont listés dans le tableau 1.

| Vitesse | Sous - Séquence 1 | Sous - Séquence 2 | Sous - Séquence 3 | Sous - Séquence 4 | Durée de la Séquence | Durée du Cycle |
|---|---|---|---|---|---|---|
| 450 cm/h | 45 min | 5 min | 6 min | 5 min | 61 min | 183 min |
| 620 cm/h | 28 min | 5 min | 7 min | 5 min | 45 min | 135 min |

Tableau 1 : paramètres utilisés sur 3 colonnes (1,6 cm id x 10 cm h) contenant 20 ml de phase MabSelect Protein A (GE Healthcare).

Les résultats sont comparés aux performances obtenues sur une colonne Batch (tableau 2) contenant la même quantité de phase stationnaire à savoir 3 x 20 ml = 60 ml. (2,8 cm id x 10 cm h).

Pour une pureté et un rendement identiques en batch et selon le procédé décrit, les critères de comparaison suivants ont été établis :
- Capacité de travail : Quantité (en gramme) d'IgG fixée par litre de phase stationnaire.
- Productivité : Quantité (en gramme) d'IgG purifiée par jour et par litre de phase stationnaire.
- Consommation : Quantité totale de fluides utilisés (rinçage, élution, régénération, équilibration) en ml par gramme d'IgG purifiées.

**Tableau 2 : résultats comparatifs des performances obtenues en Batch et selon le procédé décrit.**

| | | Mode Batch 1 colonne | invention 3 colonnes |
|---|---|---|---|
| Vitesse 450cm/h | Capacité de travail : | 20 g/l | 40 g/l |
| | Productivité : | 220 g/jour.litre | 310 g/jour.litre |
| | Consommation: | 1500 ml/g | 830 ml/g |
| Vitesse 600cm/h | Capacité de travail : | 15 g/l | 40 g/l |
| | Productivité : | 240 g/jour.litre | 445 g/jour.litre |
| | Consommation : | 2000 ml/g | 685 ml/g |

Dans les procédés chromatographiques d'adsorption des anticorps effectués en Batch, la vitesse de chargement est relativement faible afin d'obtenir, sur la phase considérée, une capacité de travail plus élevée. A l'inverse, si l'on fait le choix d'une vitesse de chargement plus élevée, cela entraîne une baisse significative de la capacité.

Les résultats obtenus avec le procédé décrit ont montré que l'utilisation de plusieurs colonnes en série dans l'étape d'adsorption, permet selon le procédé décrit de mieux utiliser la phase stationnaire. Ainsi, même pour des vitesses de chargement élevées, il est possible grâce à la mise en série des colonnes de travailler à une capacité proche de la capacité maximale de la phase.

A l'inverse du procédé Batch, ce procédé a l'avantage de ne pas être limité ni par la vitesse ni par la capacité de travail. Cet avantage se traduit par une productivité du procédé significativement plus élevée par rapport à celle du Batch. Dans notre exemple à 600 cm/h la productivité a quasiment doublée en passant du procédé Batch au procédé décrit. De même la meilleure utilisation de la phase stationnaire dans le procédé décrit entraîne une réduction importante de la consommation des différents fluides. Dans notre exemple à 600 cm/h la consommation a quasiment été divisée d'un facteur 3 en passant du procédé Batch au procédé décrit.

### Exemple 3 - Peptide / Insuline

Le procédé décrit s'applique tout particulièrement aux polypeptides tels que l'insuline humaine. L'invention fournit donc un procédé pour séparer ce polypeptide de 5,8 kDa à partir d'une solution contenant la dite molécule ainsi que des impuretés, par passage de cette solution sur un lit de phase stationnaire spécifique à la chromatographie d'échange d'ion. Le procédé de chromatographie d'échange d'ions développé sur une résine cationique met en oeuvre 3 étapes de chromatographie définies par l'utilisation d'un fluide spécifique en entrée :
Le fluide de chargement (Insuline humaine recombinantes et impuretés dans du tampon phosphate 40 mM à pH 2,5) contient la charge à traiter. La composition de ce fluide permet à la molécule d'intérêt de se fixer sur la phase stationnaire tandis que la plupart des impuretés passent à travers, car elles sont peu retenues. A l'issue de l'étape de chargement, la colonne contient une phase stationnaire sur laquelle le composant d'intérêt est fixé par force ionique.
Le fluide de rinçage (tampon phosphate 40 mM pH 2,5), permet de remplacer la phase liquide de la colonne contenant la charge par du tampon. L'étape de rinçage renouvelle ainsi la phase liquide de la colonne afin que les impuretés contenues dans la phase liquide ne soient pas éluées en même temps que l'insuline au cours de l'étape d'élution.
Le fluide d'élution de l'insuline (NaCl 1M, pH 6.,) : Ce fluide va permettre la désorption de l'insuline de la phase stationnaire grâce à l'augmentation de la force ionique et du pH. La molécule cible est alors collectée dans le liquide sortant.

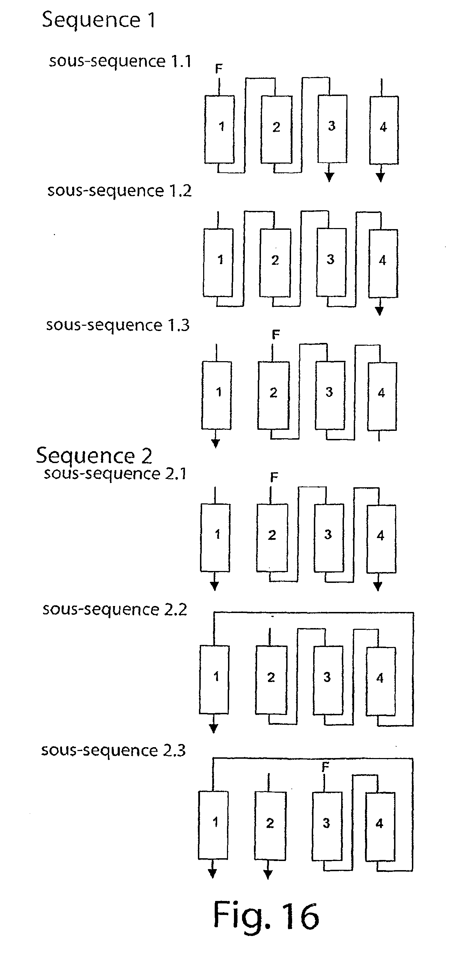

L'essai présenté selon le procédé de séparation multi-colonnes séquencé utilise dans cet exemple 4 colonnes. Les 3 étapes (chargement, rinçage, élution) utiles à la purification de l'Insuline sont réparties dans les différentes séquences et sous séquences selon le diagramme représenté à la Figure 16.

Le système constitué de 4 colonnes implique qu'un cycle est divisé en 4 séquences. Chacune des 4 séquences est divisée en 3 sous séquences :

### Séquence 1 :

Sous Séquence 1.1 : Les 3 premières colonnes, en série, définissent une zone de chargement. La colonne 4 se situe en zone d'élution.
Sous Séquence 1.2 : Dans cette sous-séquence, la colonne 1 étant quasiment totalement chargée en Insuline, elle passe en zone de rinçage. La colonne 4 éluée ne contient plus d'insuline, elle entre alors en zone de chargement, les 4 colonnes sont ainsi mises en série dans un premier temps. A ce moment là, il y a une interruption du chargement.
Sous Séquence 1.3 : L'étape de rinçage se poursuit uniquement sur la colonne 1 qui ne contient plus d'insuline dans la phase liquide et permet d'éliminer les impuretés peu retenues. Le chargement reprend alors sur les colonnes 2, 3 et 4 toujours en série.

Pour cet exemple à 4 colonnes, 4 séquences sont utiles à la réalisation d'un cycle complet. La séquence 2 se déduit de la séquence 1 par un décalage d'une colonne des lignes de fluides entrants et sortants comme décrit en figure 16

Ainsi la séquence 2 commence par le fait que la colonne 1, saturée en Insuline et rinçée de ces impuretés, peut entrer en zone d'élution. Le chargement se poursuit toujours sur les colonnes 2, 3 et 4 en série.

De même, la séquence 3 (non représentée) se déduit d'une manière identique de la séquence 2. La séquence 4 (non représentée) se déduit également de la séquence 3.

Chacun des cycles suivants redémarre à la séquence 1 et assure ainsi la continuité du procédé.

Le séquentiel, présenté sur la figure 16, comporte 3 zones (chargement, rinçage, élution), chacune de ces zones étant définies par les entrées des différents fluides. Par exemple, dans la sous séquence 1.1, entre l'arrivée de la charge sur la colonne 1 et l'arrivée du fluide d'élution sur la colonne 4, se trouve la zone de chargement.

Dans la sous-séquence 1.2 où les 4 colonnes sont en série, il a interruption de la charge et déplacement du front de chargement sur les colonnes 2, 3 et 4.

Sur le système décrit précédemment, un essai a été simulé sur la base de données expérimentales à la vitesse de chargement de 600 cm/h. La solution de chargement contient de l'insuline humaine à 2 g/l ainsi que des impuretés caractéristiques d'une charge issus d'un procédé de fermentation. Les paramètres process utilisés pour la purification de cette solution d'insuline sont listés dans le tableau 1.

**Tableau 1 : Paramètres utilisés sur 4 colonnes (id : 0,5 cm x h : 10 cm) contenant chacune 2 ml de résine cationique Toyopearl SP 550 C (Tosoh)**

| Débit linéaire | Durée Sous - Séquence 1 | Durée Sous - Séquence 2 | Durée Sous Séquence 3 | Durée Séquence | Durée Cycle |
|---|---|---|---|---|---|
| 600 cm/h | 45 min | 5 min | 10 min | 60 min | 240 min |

Les résultats sont comparés aux performances que l'on obtiendrait sur une colonne Batch (tableau 2) contenant la même quantité de phase stationnaire à savoir 4 x 2 ml = 8 ml. (1 cm id x 10 cm H).

Pour une pureté et un rendement identiques en batch et selon le procédé décrit, les critères de comparaison suivants ont été établis :
Capacité de travail : Quantité (en gramme) d'insuline fixée par litre de phase stationnaire.
Productivité : Quantité (en gramme) d'Insuline purifiée par jour et par litre de phase stationnaire.
Consommation : Quantité totale de fluides utilisés (rinçage, élution) en ml par gramme d'Insuline purifiée.

**Tableau 2 : Résultats comparatifs des performances obtenues en Mode Batch et selon le procédé décrit.**

| | | Batch 1 colonne | invention 4 colonnes |
|---|---|---|---|
| Vitesse 600cm/h | Capacité de travail : | 40 g/l | 110 g/l |
| | Productivité : | 640 g/jour.litre | 660 g/jour.litre |
| | Consommation Tampon : | 1750 ml/g | 500 ml/g |

Dans les procédés chromatographiques d'adsorption par échange d'ion effectués en Batch, la vitesse de chargement est relativement faible afin d'obtenir, sur la phase considérée, une capacité de travail plus élevée, quasiment triplée. A l'inverse, si l'on fait le choix d'une vitesse de chargement plus élevée, cela entraîne une baisse significative de la capacité.

Les résultats obtenus selon le procédé décrit ont montré que l'utilisation de plusieurs colonnes en série dans l'étape d'adsorption, permet selon le procédé décrit de mieux utiliser la phase stationnaire. Ainsi, même pour des vitesses de chargement élevées, il est possible grâce à la mise en série des colonnes de travailler à une capacité proche de la capacité maximale de la phase.

A l'inverse du procédé Batch, ce procédé a l'avantage de ne pas être limité ni par la vitesse ni par la capacité de travail. Cet avantage se traduit par une productivité du procédé plus élevée par rapport à celle du Batch de même qu'une réduction importante de la consommation des différents fluides. Dans notre exemple à 600 cm/h, pour une productivité équivalente en Batch et selon le procédé décrit, la consommation des tampons coûteux a quasiment été divisée d'un facteur 3 en passant du procédé Batch au procédé décrit. Des essais à plus grandes vitesses montrerait encore plus nettement les écarts de productivité et de consommation entre le procédé décrit et le procédé batch.

De même, nous avons comparé notre procédé aux autres procédés ayant une injection de charge continue, tels que par exemple le SMB, qui ne permet pas de travailler sur un nombre réduit de colonnes avec plusieurs éluants et sans perte de rendement. Dans notre exemple, la présence de la sous séquence 2 sans injection de la charge permet de gagner de 2 à 10% de rendement en fonction des paramètres de composition de la charge.

## Revendications

1. Procédé semi-continu de séparation sur support solide par rétention sélective séquentiel multicolonnes pour séparer un produit d'intérêt à partir d'une solution contenant un tel produit d'intérêt, par passage de cette solution sur un lit fixe de résine chromatographique et comprenant au moins trois zones, des moyens d'écoulement de liquide étant disposés entre des zones adjacentes et entre la dernière et la première zone, ce procédé comprenant le déplacement du point d'introduction de charge et plusieurs séquences, chaque séquence comprenant les étapes d'adsorption, de rinçage, de désorption, mises en oeuvre de façon simultanée ou non, chaque séquence suivante est effectuée par le déplacement des fronts dans les zones vers l'aval sensiblement d'un même incrément avant le déplacement périodique des points d'introduction et de soutirage, le procédé comprenant une sous-séquence sans injection de la charge.

2. Procédé selon la revendication 1, **caractérisé en ce qu'**il comprend plusieurs séquences, chaque séquence comprenant au moins une des étapes suivantes :
(a) introduire un certain volume d'une solution de rinçage à l'entrée de la première zone et soutirer sensiblement simultanément le même volume d'un liquide dilué en ledit produit d'intérêt, au niveau d'un point situé en aval de cette zone;
(b) introduire un certain volume de ladite solution de charge à l'entrée de la deuxième zone et soutirer sensiblement simultanément le même volume d'un liquide riche en la ou les impuretés relativement moins retenue, au niveau d'un point situé en aval de cette zone;
(c) introduire un certain volume d'une solution de rinçage à l'entrée de la troisième zone et soutirer sensiblement simultanément le même volume d'un liquide dilué en régénérant, au niveau d'un point situé en aval de cette zone;
(d) introduire un certain volume de régénérant à l'entrée de la quatrième zone et soutirer sensiblement simultanément le même volume d'un liquide dilué, au niveau d'un point situé en aval de cette zone;
(e) introduire un certain volume d'un éluant à l'entrée de la cinquième zone et soutirer sensiblement simultanément le même volume d'un liquide riche en ledit produit d'intérêt, au niveau d'un point situé en aval de cette zone;
les étapes (a), (b), (c), (d) et (e) pouvant être mises en oeuvre de façon simultanée ou non;
chaque séquence suivante étant effectuée par le déplacement périodique vers l'aval, sensiblement d'un même incrément de volume, des points d'introduction et de soutirage,
et comprenant en outre une étape
(f) déplacement des fronts dans au moins la zone (b) avant le déplacement périodique.

3. Procédé selon la revendication 1, **caractérisé en ce qu'**il comprend plusieurs séquences, chaque séquence comprenant les étapes suivantes :
(a) introduire un certain volume d'une solution d'équilibrage à l'entrée de la première zone et soutirer sensiblement simultanément le même volume d'un liquide composé d'abord de solution de régénération puis de la solution d'équilibrage, au niveau d'un point situé en aval de cette zone;
(b) introduire un certain volume de la solution de charge à traiter contenant le produit d'intérêt à l'entrée de la deuxième zone et soutirer sensiblement simultanément le même volume d'un liquide contenant la ou les impuretés relativement moins retenue, au niveau d'un point situé en aval de cette zone;
(c) introduire un certain volume d'une solution de rinçage à l'entrée de la troisième zone et soutirer sensiblement simultanément le même volume d'un liquide dilué en la ou les impuretés relativement moins retenues que le produit d'intérêt, au niveau d'un point situé en aval de cette zone;
(d) introduire un certain volume de solution d'élution à l'entrée de la quatrième zone et soutirer sensiblement simultanément le même volume d'un liquide, contenant le produit d'intérêt, au niveau d'un point situé en aval de cette zone;
(e) introduire un certain volume d'une solution de régénération à l'entrée de la cinquième zone et soutirer sensiblement simultanément le même volume d'un liquide contenant les impuretés les plus retenues, au niveau d'un point situé en aval de cette zone;
les étapes (a), (b), (c), (d) et (e) pouvant être mises en oeuvre de façon simultanée ou non;
chaque séquence suivante étant effectuée par le déplacement périodique vers l'aval, sensiblement d'un même incrément de volume, des points d'introduction et de soutirage,
et comprenant en outre une étape
(f) déplacement des fronts dans au moins la zone (c) avant le déplacement périodique.

4. Procédé selon l'une des revendications 1 à 3, **caractérisé en ce que** les étapes (d), et (e) sont mise en oeuvre avec un même fluide, ces étapes correspondant alors à une étape consistant à:
(d) introduire un certain volume de régénérant à l'entrée de la quatrième zone et soutirer sensiblement simultanément le même volume d'un liquide riche en ledit produit d'intérêt, au niveau d'un point situé en aval de cette zone;
les quatrième et cinquième zones étant alors confondues en une seule quatrième zone.

5. Procédé selon la revendication 1 à 4, **caractérisé en ce que** les étapes (a), (b), (c) et (d) sont mises en oeuvre au moins en partie simultanément.

6. Procédé selon l'une des revendications 1 à 5, **caractérisé en ce que** ledit déplacement des fronts déplace les fronts de façon synchrone dans les différentes zones.

7. Procédé selon la revendication 6, **caractérisé en ce que** le déplacement des fronts comprend les étapes suivantes:
(i) créer d'une zone boucle de circulation entre les différentes zones, de la première zone à la cinquième zone; et
(ii) mettre en circulation dans ladite boucle pour déplacer les fronts.

8. Procédé selon la revendication 6, **caractérisé en ce que** le déplacement des fronts comprend les étapes suivantes:
(i) créer une première zone de déplacement par liaison fluide de la sortie de la première zone à l'entrée de la deuxième zone et par liaison fluide de la sortie de la deuxième zone à l'entrée de la troisième zone, et déplacement vers l'aval de l'entrée de la première zone pour fournir l'entrée de la première zone de déplacement et déplacement vers l'amont de la sortie de la troisième zone pour fournir la sortie de la première zone de déplacement; et
créer une deuxième zone de déplacement par liaison fluide de la sortie de la troisième zone à l'entrée de la quatrième zone et par liaison fluide de la sortie de la quatrième zone à l'entrée de la cinquième zone et liaison fluide de la sortie de la cinquième zone à l'entrée de la première zone, et déplacement vers l'aval de l'entrée de la troisième zone pour fournir l'entrée de la deuxième zone de déplacement et déplacement vers l'amont de la sortie de la première zone pour fournir la sortie de la deuxième zone de déplacement; et
(ii) introduire un certain volume de solution de rinçage à l'entrée de la première zone de déplacement et soutirer sensiblement simultanément le même volume de solution de rinçage récupérée en sortie de la première zone de déplacement.
(iii) introduire un certain volume de solution de rinçage à l'entrée de la deuxième zone de déplacement et soutirer sensiblement simultanément le même volume de solution de rinçage récupérée en sortie de la deuxième zone de déplacement.

9. Procédé selon l'une des revendications 1 à 5, **caractérisé en ce que** ledit déplacement des fronts déplace les fronts de façon asynchrone dans les différentes zones.

10. Procédé selon la revendication 9, **caractérisé en ce que** le déplacement des fronts comprend les étapes suivantes:
(i) créer une première zone d'un premier déplacement par liaison fluide de la sortie de la première zone à l'entrée de la deuxième zone et par liaison fluide de la sortie de la deuxième zone à l'entrée de la troisième zone; et
créer une deuxième zone d'un premier déplacement par liaison fluide de la sortie de la troisième zone à l'entrée de la quatrième zone et par liaison fluide de la sortie de la quatrième zone à l'entrée de la cinquième zone et par liaison fluide de la sortie de la cinquième zone à l'entrée de la première zone; et
(ii) introduire un certain volume de ladite solution à l'entrée de la première zone de déplacement et soutirer sensiblement simultanément le même volume le même volume d'un liquide dilué en régénérant en sortie de la première zone d'un premier déplacement;
(iii) introduire un certain volume de régénérant à l'entrée de la deuxième zone de déplacement et soutirer sensiblement simultanément le même volume d'un liquide dilué en ledit produit d'intérêt en sortie de la deuxième zone d'un premier déplacement;
(iv) créer une première zone d'un second déplacement par liaison fluide de la sortie de la première zone à l'entrée de la deuxième zone et par liaison fluide de la sortie de la deuxième zone à l'entrée de la troisième zone, et déplacement vers l'aval de l'entrée de la première zone pour fournir l'entrée de la première zone d'un second déplacement et déplacement vers l'amont de la sortie de la troisième zone pour fournir la sortir de la première zone d'un second déplacement; et
créer une deuxième zone d'un second déplacement par liaison fluide de la sortie de la troisième zone à l'entrée de la quatrième zone et par liaison fluide de la sortie de la quatrième zone à l'entrée de la cinquième zone et liaison fluide de la sortie de la cinquième zone à l'entrée de la première zone, et déplacement vers l'aval de l'entrée de la troisième zone pour fournir l'entrée de la deuxième zone de déplacement et déplacement vers l'amont de la sortie de la première zone pour fournir la sortie de la deuxième zone de déplacement; et
(vi) introduire un certain volume de solution de rinçage à l'entrée de la première zone d'un second déplacement et soutirer sensiblement simultanément le même volume d'un liquide riche en la ou les impuretés relativement moins retenue en sortie de la première zone d'un second déplacement.
(vii) introduire un certain volume de solution de rinçage à l'entrée de la deuxième zone d'un second déplacement et soutirer sensiblement simultanément le même volume d'un liquide riche en ledit produit d'intérêt en sortie de la deuxième zone d'un second déplacement.

11. Procédé selon l'une des revendications 1 à 10, **caractérisé en ce que** l'étape (f) comprend un déplacement des fronts dans toutes les zones avant le déplacement périodique.

12. Procédé selon l'une des revendications 1 à 11, **caractérisé en ce que** le déplacement périodique des étapes est asynchrone.

13. Procédé selon l'une des revendications 1 à 12, **caractérisé en ce que** ledit liquide dilué en ledit produit d'intérêt est au moins en partie envoyé vers l'étape (b).

14. Procédé selon l'une des revendications 1 à 13, **caractérisé en ce qu'**il existe une zone supplémentaire, et **en ce qu'**il comprend en outre une étape (g) introduire tout ou partie du liquide dilué en ledit produit d'intérêt obtenu à l'étape (a) au niveau de ladite zone supplémentaire, et récupérer sensiblement le même volume en solution de rinçage au niveau d'un point situé en aval de cette zone.

15. Procédé selon l'une des revendications 1 à 14, **caractérisé en ce que** la chromatographie est une chromatographie d'échange ionique et le produit d'intérêt est un acide aminé, de préférence de la lysine.

16. Procédé selon l'une des revendications 1 à 15, **caractérisé en ce que** la chromatographie est une chromatographie d'échange ionique et le produit d'intérêt est l'insuline.

17. Procédé selon l'une des revendications précédentes, **caractérisé en ce que** lors de l'étape d'adsorption on injecte de la charge contenant la molécule à séparer, un ou plusieurs produits se fixant sur la phase solide, et lors de l'étape de désorption, le ou les produits qui sont fixés sur la phase solide passent dans la phase liquide.

## Claims

1. A semicontinous process of separation on a solid support by selective sequential multicolumn retention for separating a product of interest from a solution containing said product of interest, by passing this solution over a fixed bed of chromatographic resin comprising at least three zones, means for flow of liquid being arranged between adjacent zones and between the last and the first zone, said process comprising the displacement of the point of introduction of the feed and several sequences, each sequence comprising the steps of adsorption, rinsing, desorption, implemented simultaneously or not simultaneously, each subsequent sequence being carried out by the downstream displacement of the fronts in the zones by substantially the same increment before the periodical displacement of the introduction and withdrawal points, the process comprising a sub-sequence without feed injection.

2. Process according to claim 1, **characterized in that** it comprises several sequences, each sequence comprising at least one of the following steps:
(a) introduction of a certain volume of a rinsing solution at the inlet of the first zone and substantially simultaneous withdrawal of the same volume of a liquid diluted with regard to said product of interest, at a point situated downstream of this zone;
(b) introduction of a certain volume of said feed solution at the inlet of the second zone and substantially simultaneous withdrawal of the same volume of a liquid rich in the impurity or impurities that are relatively less retained, at a point situated downstream of this zone;
(c) introduction of a certain volume of a rinsing solution at the inlet of the third zone and substantially simultaneous withdrawal of the same volume of a liquid diluted with regard to regenerating agent, at a point situated downstream of this zone;
(d) introduction of a certain volume of regenerating agent at the inlet of the fourth zone and substantially simultaneous withdrawal of the same volume of a diluted liquid, at a point situated downstream of this zone;
(e) introduction of a certain volume of an eluent at the inlet of the fifth zone and substantially simultaneous withdrawal of the same volume of a liquid rich in said product of interest, at a point situated downstream of this zone;
it being possible for steps (a), (b), (c), (d) and (e) to be implemented simultaneously or not simultaneously;
each subsequent sequence being carried out by the periodical downstream displacement, by substantially the same volume increment, of the introduction and withdrawal points,
and in addition comprising a step
(f) displacement of the fronts in at least the zone (b) before the periodical displacement.

3. Process according to claim 1, **characterized in that** it comprises several sequences, each sequence comprising the following steps:
(a) introduction of a certain volume of an equilibration solution at the inlet of the first zone and approximatively simultaneous withdrawal of the same volume of a liquid composed firstly of regenerating solution and then of the equilibration solution, at a point situated downstream of this zone;
(b) introduction of a certain volume of the solution of feed to be treated containing the product of interest at the inlet of the second zone and approximatively simultaneous withdrawal of the same volume of a liquid containing the impurity or impurities that are relatively less retained, at a point situated downstream of this zone;
(c) introduction of a certain volume of a rinsing solution at the inlet of the third zone and substantially simultaneous withdrawal of the same volume of a liquid diluted with regard to the impurity or impurities that are relatively less retained than the product of interest, at a point situated downstream of this zone;
(d) introduction of a certain volume of eluting solution at the inlet of the fourth zone and substantially simultaneous withdrawal of the same volume of a liquid, containing the product of interest, at a point situated downstream of this zone;
(e) introduction of a certain volume of a regenerating solution at the inlet of the fifth zone and substantially simultaneous withdrawal of the same volume of a liquid containing the impurities that are most retained, at a point situated downstream of this zone;
it being possible for steps (a), (b), (c), (d) and (e) to be implemented simultaneously or not simultaneously;
each subsequent sequence being carried out by the periodical downstream displacement, by substantially the same volume increment, of the introduction and withdrawal points,
and in addition comprising a step
(f) displacement of the fronts in at least the zone (c) before the periodical displacement.

4. Process according to one of claims 1 to 3, **characterized in that** steps (d), and (e) are implemented with the same fluid, said steps then corresponding to a step consisting of:
(d) introduction of a certain volume of regenerating agent at the inlet of the fourth zone and substantially simultaneous withdrawal of the same volume of a liquid rich in said product of interest, at a point situated downstream of this zone;
the fourth and fifth zones then being merged in a single fourth zone.

5. Process according to claims 1 to 4, **characterized in that** steps (a), (b), (c) and (d) are implemented at least in part simultaneously.

6. Process according to one of claims 1 to 5, **characterized in that** said displacement of the fronts displaces the fronts synchronously in the different zones.

7. The process according to claim 6, **characterized in that** the displacement of the fronts comprises the following steps:
(i) creation of a circulation loop zone between the different zones, from the first zone to the fifth zone; and
(ii) applying circulation in said loop for displacing the fronts.

8. Process according to claim 6, **characterized in that** the displacement of the fronts comprises the following steps:
(i) creation of a first displacement zone by fluid connection from the outlet of the first zone to the inlet of the second zone and by fluid connection from the outlet of the second zone to the inlet of the third zone, and downstream displacement of the inlet of the first zone to provide the inlet of the first displacement zone and upstream displacement of the outlet of the third zone to provide the outlet of the first displacement zone; and
creation of a second displacement zone by fluid connection from the outlet of the third zone to the inlet of the fourth zone and by fluid connection from the outlet of the fourth zone to the inlet of the fifth zone and fluid connection from the outlet of the fifth zone to the inlet of the first zone, and downstream displacement of the inlet of the third zone to provide the inlet of the second displacement zone and upstream displacement of the outlet of the first zone to provide the outlet of the second displacement zone; and
(ii) introduction of a certain volume of rinsing solution at the inlet of the first displacement zone and substantially simultaneous withdrawal of the same volume of rinsing solution recovered at the outlet of the first displacement zone.
(iii) introduction of a certain volume of rinsing solution at the inlet of the second displacement zone and substantially simultaneous withdrawal of the same volume of rinsing solution recovered at the outlet of the second displacement zone.

9. Process according to one of claims 1 to 5, **characterized in that** said displacement of the fronts displaces the fronts asynchronously in the different zones.

10. Process according to claim 9, **characterized in that** the displacement of the fronts comprises the following steps:
(i) creation of a first zone of a first displacement by fluid connection from the outlet of the first zone to the inlet of the second zone and by fluid connection from the outlet of the second zone to the inlet of the third zone; and
creation of a second zone of a first displacement by fluid connection from the outlet of the third zone to the inlet of the fourth zone and by fluid connection from the outlet of the fourth zone to the inlet of the fifth zone and by fluid connection from the outlet of the fifth zone to the inlet of the first zone; and
(ii) introduction of a certain volume of said solution at the inlet of the first displacement zone and substantially simultaneous withdrawal of the same volume of a liquid diluted with regard to regenerating agent at the outlet from the first zone of a first displacement;
(iii) introduction of a certain volume of regenerating agent at the inlet of the second displacement zone and substantially simultaneous withdrawal of the same volume of a liquid diluted with regard to said product of interest at the outlet from the second zone of a first displacement;
(iv) creation of a first zone of a second displacement by fluid connection from the outlet of the first zone to the inlet of the second zone and by fluid connection from the outlet of the second zone to the inlet of the third zone, and downstream displacement of the inlet of the first zone to provide the inlet of the first zone of a second displacement and upstream displacement of the outlet of the third zone to provide the outlet of the first zone of a second displacement; and
creation of a second zone of a second displacement by fluid connection from the outlet of the third zone to the inlet of the fourth zone and by fluid connection from the outlet of the fourth zone to the inlet of the fifth zone and fluid connection from the outlet of the fifth zone to the inlet of the first zone, and downstream displacement of the inlet of the third zone to provide the inlet of the second displacement zone and upstream displacement of the outlet of the first zone to provide the outlet of the second displacement zone; and
(vi) introduction of a certain volume of rinsing solution at the inlet of the first zone of a second displacement and substantially simultaneous withdrawal of the same volume of a liquid rich in the impurity or impurities that are relatively less retained at the outlet from the first zone of a second displacement.
(vii) introduction of a certain volume of rinsing solution at the inlet of the second zone of a second displacement and substantially simultaneous withdrawal of the same volume of a liquid rich in said product of interest at the outlet from the second zone of a second displacement.

11. Process according to one of claims 1 to 10, **characterized in that** step (f) comprises a displacement of the fronts in all the zones before the periodical displacement.

12. The process according to one of claims 1 to 11, **characterized in that** the periodical displacement of the steps is asynchronous.

13. The process according to one of claims 1 to 12, **characterized in that** said liquid diluted with regard to said product of interest is at least in part sent to step (b).

14. Process according to one of claims 1 to 13, **characterized in that** there is a supplementary zone, and **in that** it in addition comprises a step (g) of introduction of all or part of the liquid diluted with regard to said product of interest obtained in step (a) in said supplementary zone, and recovery of substantially the same volume of rinsing solution at a point situated downstream of this zone.

15. Process according to one of claims 1 to 14, **characterized in that** the chromatography is an ion exchange chromatography and the product of interest is an amino acid, preferably lysine.

16. Process according to one of claims 1 to 15, **characterized in that** the chromatography is an ion exchange chromatography and the product of interest is insulin.

17. Process according to one of the preceding claims, **characterised in that**, during the adsorption step, feed containing the molecule to be separated is injected; one or more of the products becoming attached to the solid phase and during the desorption step, the product or products that are fixed on the solid phase pass into the liquid phase.

## Patentansprüche

1. Halbkontinuierliches Verfahren zur Trennung auf festem Träger durch sequentielle selektive Retention mittels mehrerer Kolonnen zum Abtrennen eines Produkts von Interesse ausgehend von einer Lösung, die ein solches Produkt von Interesse enthält, durch Leiten dieser Lösung über ein Festbett von chromatographischem Harz, das mindestens drei Bereiche umfasst, wobei Flüssigkeitsflussmittel zwischen benachbarten Bereichen und zwischen dem letzten und dem ersten Bereich angeordnet sind, wobei dieses Verfahren die Verschiebung der Beladungseinführungsstelle und mehrere Sequenzen umfasst, wobei jede Sequenz die Schritte der Adsorption, des Spülens und der Desorption umfasst, die gleichzeitig durchgeführt werden oder nicht, wobei jede nachfolgende Sequenz durch die Verschiebung der Fronten in den Bereichen stromabwärts im Wesentlichen um ein und dasselbe Inkrement vor der periodischen Verschiebung der Einführungs- und Abzugsstellen durchgeführt wird, wobei das Verfahren eine Teilsequenz ohne Einführung der Beladung umfasst.

2. Verfahren nach Anspruch 1, **dadurch gekennzeichnet, dass** es mehrere Sequenzen umfasst, wobei jede Sequenz mindestens einen der folgenden Schritte umfasst:
(a) Einführen eines gewissen Volumens einer Spüllösung am Eingang des ersten Bereiches und im Wesentlichen gleichzeitiges Abziehen desselben Volumens einer in Bezug auf das Produkt von Interesse verdünnten Flüssigkeit an einer Stelle, die sich stromabwärts dieses Bereiches befindet;
(b) Einführen eines gewissen Volumens der Beladungslösung am Eingang des zweiten Bereiches und im Wesentlichen gleichzeitiges Abziehen desselben Volumens einer mit der oder den vergleichsweise weniger zurückgehaltenen Verunreinigung(en) angereicherten Flüssigkeit an einer Stelle, die sich stromabwärts dieses Bereiches befindet;
(c) Einführen eines gewissen Volumens einer Spüllösung am Eingang des dritten Bereiches und im Wesentlichen gleichzeitiges Abziehen desselben Volumens einer in Bezug auf das Regenerierungsmittel verdünnten Flüssigkeit an einer Stelle, die sich stromabwärts dieses Bereiches befindet;
(d) Einführen eines gewissen Volumens an Regenerierungsmittel am Eingang des vierten Bereiches und im Wesentlichen gleichzeitiges Abziehen desselben Volumens einer verdünnten Flüssigkeit an einer Stelle, die sich stromabwärts dieses Bereiches befindet;
(e) Einführen eines gewissen Volumens eines Eluierungsmittels am Eingang des fünften Bereiches und im Wesentlichen gleichzeitiges Abziehen desselben Volumens einer mit dem Produkt von Interesse angereicherten Flüssigkeit an einer Stelle, die sich stromabwärts dieses Bereiches befindet;
wobei die Schritte (a), (b), (c), (d) und (e) gleichzeitig oder zu unterschiedlichen Zeitpunkten durchgeführt werden können;
wobei jede nachfolgende Sequenz durch die periodische Verschiebung der Einführungs- und Abzugsstellen stromabwärts im Wesentlichen um ein und dasselbe Volumeninkrement durchgeführt wird,
und außerdem einen Schritt umfasst:
(f) Verschiebung der Fronten wenigstens im Bereich (b) vor der periodischen Verschiebung.

3. Verfahren nach Anspruch 1, **dadurch gekennzeichnet, dass** es mehrere Sequenzen umfasst, wobei jede Sequenz die folgenden Schritte umfasst:
(a) Einführen eines gewissen Volumens einer Ausgleichslösung am Eingang des ersten Bereiches und im Wesentlichen gleichzeitiges Abziehen desselben Volumens einer Flüssigkeit, die zunächst aus Regenerierungslösung und dann aus der Ausgleichslösung besteht, an einer Stelle, die sich stromabwärts dieses Bereiches befindet;
(b) Einführen eines gewissen Volumens der zu behandelnden Beladungslösung, die das Produkt von Interesse enthält, am Eingang des zweiten Bereiches und im Wesentlichen gleichzeitiges Abziehen desselben Volumens einer die vergleichsweise weniger zurückgehaltene(n) Verunreinigung(en) enthaltenden Flüssigkeit an einer Stelle, die sich stromabwärts dieses Bereiches befindet;
(c) Einführen eines gewissen Volumens einer Spüllösung am Eingang des dritten Bereiches und im Wesentlichen gleichzeitiges Abziehen desselben Volumens einer Flüssigkeit, die in Bezug auf die im Vergleich zu dem Produkt von Interesse weniger zurückgehaltene(n) Verunreinigung(en) verdünnt ist, an einer Stelle, die sich stromabwärts dieses Bereiches befindet;
(d) Einführen eines gewissen Volumens an Eluierungslösung am Eingang des vierten Bereiches und im Wesentlichen gleichzeitiges Abziehen desselben Volumens einer das Produkt von Interesse enthaltenden Flüssigkeit an einer Stelle, die sich stromabwärts dieses Bereiches befindet;
(e) Einführen eines gewissen Volumens einer Regenerierungslösung am Eingang des fünften Bereiches und im Wesentlichen gleichzeitiges Abziehen desselben Volumens einer die am stärksten zurückgehaltenen Verunreinigungen enthaltenden Flüssigkeit an einer Stelle, die sich stromabwärts dieses Bereiches befindet;
wobei die Schritte (a), (b), (c), (d) und (e) gleichzeitig oder zu unterschiedlichen Zeitpunkten durchgeführt werden können;
wobei jede nachfolgende Sequenz durch die periodische Verschiebung der Einführungs- und Abzugsstellen stromabwärts im Wesentlichen um ein und dasselbe Volumeninkrement durchgeführt wird,
und außerdem einen Schritt umfasst:
(f) Verschiebung der Fronten wenigstens im Bereich (c) vor der periodischen Verschiebung.

4. Verfahren nach einem der Ansprüche 1 bis 3, **dadurch gekennzeichnet, dass** die Schritte (d) und (e) mit demselben Fluid durchgeführt werden, wobei diese Schritte dann einem Schritt entsprechen, welcher besteht aus:
(d) Einführen eines gewissen Volumens an Regenerierungsmittel am Eingang des vierten Bereiches und im Wesentlichen gleichzeitiges Abziehen desselben Volumens einer mit dem Produkt von Interesse angereicherten Flüssigkeit an einer Stelle, die sich stromabwärts dieses Bereiches befindet;
wobei der vierte und fünfte Bereich dann zu einem einzigen vierten Bereich zusammenfallen.

5. Verfahren nach Anspruch 1 bis 4, **dadurch gekennzeichnet, dass** die Schritte (a), (b), (c) und (d) wenigstens teilweise gleichzeitig durchgeführt werden.

6. Verfahren nach einem der Ansprüche 1 bis 5, **dadurch gekennzeichnet, dass** die Verschiebung der Fronten die Fronten auf eine synchrone Weise in den verschiedenen Bereichen verschiebt.

7. Verfahren nach Anspruch 6, **dadurch gekennzeichnet, dass** die Verschiebung der Fronten die folgenden Schritte umfasst:
(i) Erzeugen eines Zirkulationsschleifen-Bereiches zwischen den verschiedenen Bereichen, vom ersten Bereich bis zum fünften Bereich; und
(ii) Zirkulierenlassen in der Schleife, um die Fronten zu verschieben.

8. Verfahren nach Anspruch 6, **dadurch gekennzeichnet, dass** die Verschiebung der Fronten die folgenden Schritte umfasst:
(i) Erzeugen eines ersten Verschiebungsbereiches durch Fluidverbindung des Ausgangs des ersten Bereiches mit dem Eingang des zweiten Bereiches und durch Fluidverbindung des Ausgangs des zweiten Bereiches mit dem Eingang des dritten Bereiches, und Verschiebung des Eingangs des ersten Bereiches stromabwärts, um den Eingang des ersten Verschiebungsbereiches zu liefern, und Verschiebung des Ausgangs des dritten Bereiches stromaufwärts, um den Ausgang des ersten Verschiebungsbereiches zu liefern; und
Erzeugen eines zweiten Verschiebungsbereiches durch Fluidverbindung des Ausgangs des dritten Bereiches mit dem Eingang des vierten Bereiches und durch Fluidverbindung des Ausgangs des vierten Bereiches mit dem Eingang des fünften Bereiches und Fluidverbindung des Ausgangs des fünften Bereiches mit dem Eingang des ersten Bereiches, und Verschiebung des Eingangs des dritten Bereiches stromabwärts, um den Eingang des zweiten Verschiebungsbereiches zu liefern, und Verschiebung des Ausgangs des ersten Bereiches stromaufwärts, um den Ausgang des zweiten Verschiebungsbereiches zu liefern; und
(ii) Einführen eines gewissen Volumens an Spüllösung am Eingang des ersten Verschiebungsbereiches und im Wesentlichen gleichzeitiges Abziehen desselben Volumens an zurückgewonnener Spüllösung am Ausgang des ersten Verschiebungsbereiches,
(iii) Einführen eines gewissen Volumens an Spüllösung am Eingang des zweiten Verschiebungsbereiches und im Wesentlichen gleichzeitiges Abziehen desselben Volumens an zurückgewonnener Spüllösung am Ausgang des zweiten Verschiebungsbereiches.

9. Verfahren nach einem der Ansprüche 1 bis 5, **dadurch gekennzeichnet, dass** die Verschiebung der Fronten die Fronten auf eine asynchrone Weise in den verschiedenen Bereichen verschiebt.

10. Verfahren nach Anspruch 9, **dadurch gekennzeichnet, dass** die Verschiebung der Fronten die folgenden Schritte umfasst:
(i) Erzeugen eines ersten Bereiches einer ersten Verschiebung durch Fluidverbindung des Ausgangs des ersten Bereiches mit dem Eingang des zweiten Bereiches und durch Fluidverbindung des Ausgangs des zweiten Bereiches mit dem Eingang des dritten Bereiches; und
Erzeugen eines zweiten Bereiches einer ersten Verschiebung durch Fluidverbindung des Ausgangs des dritten Bereiches mit dem Eingang des vierten Bereiches und durch Fluidverbindung des Ausgangs des vierten Bereiches mit dem Eingang des fünften Bereiches und durch Fluidverbindung des Ausgangs des fünften Bereiches mit dem Eingang des ersten Bereiches; und
(ii) Einführen eines gewissen Volumens der Lösung am Eingang des ersten Verschiebungsbereiches und im Wesentlichen gleichzeitiges Abziehen desselben Volumens einer in Bezug auf das Regenerierungsmittel verdünnten Flüssigkeit am Ausgang des ersten Bereiches einer ersten Verschiebung;
(iii) Einführen eines gewissen Volumens an Regenerierungsmittel am Eingang des zweiten Verschiebungsbereiches und im Wesentlichen gleichzeitiges Abziehen desselben Volumens einer in Bezug auf das Produkt von Interesse verdünnten Flüssigkeit am Ausgang des zweiten Bereiches einer ersten Verschiebung;
(iv) Erzeugen eines ersten Bereiches einer zweiten Verschiebung durch Fluidverbindung des Ausgangs des ersten Bereiches mit dem Eingang des zweiten Bereiches und durch Fluidverbindung des Ausgangs des zweiten Bereiches mit dem Eingang des dritten Bereiches, und Verschiebung des Eingangs des ersten Bereiches stromabwärts, um den Eingang des ersten Bereiches einer zweiten Verschiebung zu liefern, und Verschiebung des Ausgangs des dritten Bereiches stromaufwärts, um den Ausgang des ersten Bereiches einer zweiten Verschiebung zu liefern; und
Erzeugen eines zweiten Bereiches einer zweiten Verschiebung durch Fluidverbindung des Ausgangs des dritten Bereiches mit dem Eingang des vierten Bereiches und durch Fluidverbindung des Ausgangs des vierten Bereiches mit dem Eingang des fünften Bereiches und Fluidverbindung des Ausgangs des fünften Bereiches mit dem Eingang des ersten Bereiches, und Verschiebung des Eingangs des dritten Bereiches stromabwärts, um den Eingang des zweiten Verschiebungsbereiches zu liefern, und Verschiebung des Ausgangs des ersten Bereiches stromaufwärts, um den Ausgang des zweiten Verschiebungsbereiches zu liefern; und
(vi) Einführen eines gewissen Volumens an Spüllösung am Eingang des ersten Bereiches einer zweiten Verschiebung und im Wesentlichen gleichzeitiges Abziehen desselben Volumens einer mit der oder den vergleichsweise weniger zurückgehaltenen Verunreinigung(en) angereicherten Flüssigkeit am Ausgang des ersten Bereiches einer zweiten Verschiebung,
(vii) Einführen eines gewissen Volumens an Spüllösung am Eingang des zweiten Bereiches einer zweiten Verschiebung und im Wesentlichen gleichzeitiges Abziehen desselben Volumens einer mit dem Produkt von Interesse angereicherten Flüssigkeit am Ausgang des zweiten Bereiches einer zweiten Verschiebung.

11. Verfahren nach einem der Ansprüche 1 bis 10, **dadurch gekennzeichnet, dass** der Schritt (f) eine Verschiebung der Fronten in allen Bereichen vor der periodischen Verschiebung umfasst.

12. Verfahren nach einem der Ansprüche 1 bis 11, **dadurch gekennzeichnet, dass** die periodische Verschiebung der Schritte asynchron ist.

13. Verfahren nach einem der Ansprüche 1 bis 12, **dadurch gekennzeichnet, dass** die in Bezug auf das Produkt von Interesse verdünnte Flüssigkeit wenigstens teilweise dem Schritt (b) zugeführt wird.

14. Verfahren nach einem der Ansprüche 1 bis 13, **dadurch gekennzeichnet, dass** ein zusätzlicher Bereich existiert, und **dadurch**, dass es außerdem einen Schritt (g) umfasst: Einführen der gesamten oder eines Teils der in Bezug auf das Produkt von Interesse verdünnten Flüssigkeit, die in Schritt (a) erhalten wurde, in den zusätzlichen Bereich, und Zurückgewinnen im Wesentlichen desselben Volumens an Spüllösung an einer Stelle, die sich stromabwärts dieses Bereiches befindet.

15. Verfahren nach einem der Ansprüche 1 bis 14, **dadurch gekennzeichnet, dass** die Chromatographie eine Ionenaustauschchromatographie ist und das Produkt von Interesse eine Aminosäure ist, vorzugsweise Lysin.

16. Verfahren nach einem der Ansprüche 1 bis 15, **dadurch gekennzeichnet, dass** die Chromatographie eine Ionenaustauschchromatographie ist und das Produkt von Interesse Insulin ist.

17. Verfahren nach einem der vorhergehenden Ansprüche, **dadurch gekennzeichnet, dass** während des Adsorptionsschrittes die Beladung eingeführt wird, die das zu abzutrennende Molekül enthält, wobei ein oder mehrere Produkte auf der festen Phase fixiert werden, und während des Desorptionsschrittes das oder die Produkte, die auf der festen Phase fixiert sind, in die flüssige Phase übergehen.
